## Europäisches Patentamt

## European Patent Office

## Office européen des brevets

(19)

(11) Veröffentlichungsnummer: **0 239 749**

**B1**

(12) **EUROPÄISCHE PATENTSCHRIFT**

(45) Veröffentlichungstag der Patentschrift: **25.07.90**

(51) Int. Cl.⁵: **H 04 L 9/00**

(21) Anmeldenummer: **87101526.9**

(22) Anmeldetag: **05.02.87**

(54) **Kryptographie-Verfahren und Kryptographie-Prozessor zur Durchführung des Verfahrens.**

(30) Priorität: **05.03.86 DE 3607646**

(43) Veröffentlichungstag der Anmeldung:
**07.10.87 Patentblatt 87/41**

(45) Bekanntmachung des Hinweises auf die
Patenterteilung:
**25.07.90 Patentblatt 90/30**

(84) Benannte Vertragsstaaten:
**AT BE CH DE ES FR GB IT LI LU NL SE**

(56) Entgegenhaltungen:
EP-A-0 199 620
DE-A-3 138 698
FR-A-2 510 280

DIGEST OF PAPERS FOR THE 1982
GOVERNMENT MICROCIRCUIT APPLICATIONS
CONFERENCE, November 1982, Seiten 1-12;
RIEDEN et al.: "A two-chip implementation of
the RSA public-key encryption algorithm"

(73) Patentinhaber: **Sedlak, Holger**
**Braunschweiger Strasse 1 a**
**D-3300 Braunschweig (DE)**

(72) Erfinder: **Sedlak, Holger**
**Braunschweiger Strasse 1 a**
**D-3300 Braunschweig (DE)**

(74) Vertreter: **Thömen, Uwe, Dipl.-Ing.**
**Patentanwalt U. Thömen Zeppelinstrasse 5**
**D-3000 Hannover 1 (DE)**

(56) Entgegenhaltungen:
IEEE GLOBAL TELECOMMUNICATIONS
CONFERENCE GLOBECOM' 83, San Diego, 28.
November - 1. Dezember 1983, Conference
Record, Band 2, Seiten 1085-1090, IEEE, New
York, US; YAMAMOTO et al.: "A data
encryption device incorporating fast PKDS"

IEEE TRANSACTIONS ON COMPUTERS, Band
C-32, Nr. 5, Mai 1983, Seiten 497-500, IEEE, New
York, US; BLAKLEY: "A computer algorithm for
calculating the product AB modulo M"

Courier Press, Leamington Spa, England.

**Beschreibung**

Mit der ständig wachsenden Verbreitung elektronischer Verfahren der Kommunikation und der Informations-Speicherung ist die Forderung nach Geheimhaltung, insbesondere der Geheimhaltung wichtiger Dokumente, wie z.B. Banküberweisungen, Verträge und dergleichen, unverzichtbar geworden.

Während das Problem des Datenschutzes in der Gesetzgebung bereits eine gewisse Berücksichtigung gefunden hat, sind die technischen Probleme zur Druchführung des Datenschutzes mittels der Geheimhaltung von zu übermittelnden Daten bisher noch höchst unbefriedigend gelöst. Die Übertragung von Daten über Funk oder Breitbandkabel erfolgt mehr oder weniger öffentlich. Jedenfalls wird für die Vertraulichkeit der Übertragung keine Garantie übernommen. Die Gefahr des Mißbrauches ist dabei keinesfalls auszuschließen.

Hinsichtlich der Übertragung von Daten über Funk oder Kabel ist diese Gefahr mit technischen Mitteln nicht zu beseitigen. Der Benutzer selbst muß für die erforderliche Sicherheit sorgen. Hierzu gehört auch die Sicherung der Authentizität des Absenders sowie der Manipulationsschutz der Nachricht.

Aus Sicherheitsgründen gilt es deshalb, die zu übertragenden Informationen, Daten, Texte usw. zu verschlüsseln, d.h., derartig umzuwandeln, daß ein Unbefugter sie nicht verstehen kann. Dabei kann allgemein gesagt werden, daß eine Verschlüsselung um so sicherer ist, je komplizierter die der Verschlüsselung zugrunde liegenden Operationen sind.

Bei den als klassisch zu bezeichnenden Verschlüsselungs-Verfahren handelt es sich um symmetrische Methoden, bei denen der Chiffrier- und Dechiffrier-Schlüssel gleichartig, d.h. identisch oder invers sind. Solange der diesbezügliche Schlüssel geheim ist, kann die entsprechend chiffrierte Nachricht öffentlich übertragen werden. Damit aber der Empfänger diese Nachricht verstehen kann, ist es erforderlich, daß dem Empfänger der geheime Kodier-Schlüssel durch einen vertrauendswürdigen Boten zugestellt wird. Diese Art der Zustellung des geheimen Schlüssels ist umständlich und zeitraubend, und zwar besonders dann, wenn mehrere Empfänger mit einer vertraulichen Nachricht versorgt werden sollen. Im übrigen mutet es im elektronischen Zeitalter anachronistisch an, Kuriere für die Übermittlung von geheimen Chiffrier-Schlüsseln einzusetzen.

Demgegenüber stellen die Chiffrier-Methoden nach dem sogenannten Public-Key-Code-Verfahren gedanklich einen großen Fortschritt dar. Diese Public-Key-Code-Verfahren sind durch eine asymmetrische Verschlüsselung gekennzeichnet. Das bedeutet, daß zum Ver- und Entschlüsseln zwei verschiedene Schlüssel benutzt werden. Bei den asymmetrischen Verfahren ist sichergestellt, daß der eine Schlüssel sich nicht ohne Zusatzinformation aus dem anderen berechnen läßt. Einer der beiden Schlüssel kann daher veröffentlicht werden. Aus diesem Grunde haben diese Verfahren die bezeichnung "Public-Key-Code-Verfahren" erhalten.

Will ein Benutzter der öffentlichen Netze mit anderen Teilnehmern mittels eines Public-Key-Code-Verfahrens Nachrichten austauschen, so muß er ein einziges Mal zwei Schlüssel E und D erzeugen. Den Schlüssel E zum Verschlüsseln macht er über ein öffentliches Register allen anderen Benutzern zugänglich, den Schlüssel D zum Entschlüsseln hält er geheim. Darüber hinaus werden bei manchen Verfahren auch die allgemeinen Rechenvorschriften der Verschlüsselung bekanntgegeben, ohne dadurch die Sicherheit der Geheimhaltung des Inhalts der verschlüsselten Nachrichten zu gefährden. Auch ist die Authentizität der Nachricht kein Problem. Die Sicherheit der asymmetrischen Methode beruht darauf, daß es praktisch unmöglich ist, D aus E zu berechnen.

Jeder, der einem anderen Benutzer eine Nachricht zusenden möchte, besorgt sich den Schlüssel E aus dem veröffentlichten Register, verschlüsselt damit die Nachricht und überträgt den so erhaltenen Code im unsicheren (gegebenenfalls digitalen) Netz, beispielsweise dem öffentlichen Telefonnetz. Der adressierte Benutzer (Empfänger) entschlüsselt den empfangenen Code mit seinem geheimen Schlüssel D und erzeugt so die ursprüngliche Nachricht. Sowohl zur Übermittlung eines Schlüssels als auch zur Übermittlung der Nachricht selbst erübrigt sich somit ein sicherer Übertragungskanal. Der adressierte Benutzer erhält ausschließlich Nachrichten, die mit seinem eigenen Schlüssel verschlüsselt worden sind. Daher braucht er nur auf den eigenen Schlüssel B zuzugreifen.

Bei diesen Verfahren wird somit eine leichte Verfügbarkeit der Schlüssel erreicht. Ebenso wird der Benutzer der Verwaltung eines umfangreichen persönlichen Schlüsselregisters enthoben. Die Schlüsselverwaltung erfolgt nur einmal, und zwar zentral im jedermann zugänglichen Register, z.B. nach Art elektronischer Telefonbücher. Mit dieser Übertragungsprozedur können alle Arten von Übertragungsnetzen (z.B. "ISDN") sicher gemacht werden.

Bei der beschriebenen Ausführungsform des Public-Key-Code-Verfahrens ist noch nicht die Sicherung der Absenderauthentizität sowie der Manipulationsschutz der Nachricht gewährleistet. Prinzipiell ist es aber möglich, fälschungssichere "Unterschriften" in digitaler Form zu übermitteln, und zwar dann, wenn die Reihenfolge der Anwendung der Schlüssel E und D vertauschbar ist. Der Absender kann dann eine Signatur erzeugen, die zusammen mit der verschlüsselten Nachricht übertragen wird. Die Signatur ist ein mit dem geheimen Absenderschlüssel D verschlüsselter "Extrakt" der Nachricht. Zur Überprüfung der Absenderauthentizität erzeugt der Empfänger aus der rekonstruierten Nachricht ebenfalls den Extrakt, entschlüsselt die Signatur mit dem öffentlichen Absenderschlüssel E und vergleicht beide. Sind die identisch, so muß die Nachricht vom angegebenen Absender stammen, da nur der Absender den zum Absenderschlüssel E passenden Schlüssel D kennt, mit dem die Signatur verschlüsselt wurde.

Mit der Signatur ist die Nachricht auch vor Manipulationen geschützt. Der Absender kann die übertragene Nachricht nicht abstreiten, da der Empfänger im Besitz einer Signatur dieser Nachricht ist. Andererseits kann der Empfänger die Nachricht nicht verändern, da er für die verfälschte Nachricht keine Signatur erzeugen kann. Diese hängt wegen des Extraktes nicht nur vom Absender, sondern auch von der Nachricht ab. Hierdurch wird ein höherer Schutz als durch die Unterschrift unter einem Dokument gewährleistet.

Das wohl bekannteste Public-Key-Code-Verfahren ist das nach den Anfangsbuchstaben seiner Erfinder Rivest, Shamir und Adleman benannte RSA-Verfahren. Die Sicherheit dieses RSA-Verfahrens beruht darauf, daß es praktisch unmöglich ist, große Zahlen (z.B. 200 Dezimalstellen) zu faktorisieren, d.h. alle Primzahlen zu finden, durch die diese große Zahl ohne Rest geteilt werden kann.

Das RSA-Verfahren funktioniert folgendermaßen: Zunächst wählt jeder Benutzer des RSA-Systems zwei große Primzahlen p und q und eine weitere große Zahl E. Die Zahlen können z.B. mit dem Zufallszahlen-Generator eines Rechners erzeugt werden. Zur Beantwortung der Frage, ob es sich bei der jeweils vorliegenden Zahl um eine Primzahl handelt oder nicht, stehen Algorithmen zur Verfügung (siehe z.B.: Pomerance, C. "Recent Developments in Primality Testing", Department of Mathematics, University of Georgia, in "The Mathematical Intelligencer" S. 97—104, Vol 3, Nr. 3, 1981).

Das RSA-Verfahren schreibt eine bestimmte Mindestlänge für die Primzahlen nicht vor. Kurze Zahlen machen den Algorithmus schneller, vergrößern aber die Gefahr, daß das Produkt der Primzahlen faktorisiert werden kann. Bei langen Zahlen ist es umgekehrt. 100 Dezimalstellen werden allgemein als ein guter Kompromiß angesehen. N ist das Produkt aus den Primzahlen p und q. Das Zahlenpaar (E, N) ist der öffentliche Schlüssel, während die Primzahlen p und q ausschließlich dem Empfänger einer Nachricht bekannt sind.

Zur Chiffrierung der Nachricht verwandelt der Absender zunächst seinen Text in eine Kette von Dezimalzahlen. Diese Kette wird dann in gleichlange Glieder $P_i < N$ zerlegt. Diese Glieder werden sodann einzeln chiffriert, indem man sie jeweils in die E-te Potenz erhebt und dann modulo N bildet, d.h., es entstehen die Zahlen $C_i = P_i^E$ modulo N. Diese Zahlen $C_i$ werden dann über einen unsicheren Kanal geschickt. Zur Auswertung der Zahlen ist es erforderlich, ihren Exponenten modulo $\phi(N)$ zu berechnen, wobei $\phi(N) = (p-1) \cdot (q-1)$ ist. Da ausschließlich der Empfänger die Primzahlen p und q kennt, kann nur er den Dechiffrier-Schlüssel $D = E^{-1}$ modulo $\phi(N)$ berechnen. Zu diesem Zweck erhebt der Empfänger jede empfangene Zahl $C_i$ in die D-te Potenz und reduziert modulo N. Da $C_i$ modulo $N = D_i^{ED}$ modulo N und ED modulo $\phi(N) = 1$, ergibt die Operation $P_i^{ED}$ modulo N wieder der Zahlenblöcke des Klartextes.

Außer dens als "klassisch" bezeichneten Chiffrier-Verfahren zeigen auch die bisher bekanntgewordenen Public-Key-Code-Verfahren gravierende Mängel. Sowohl software- als auch hardwaremäßige Realisierungen scheiterten bisher stets an dem immensen Aufwand und den damit verbundenen hohen Kosten.

Nach dem bishereigen Stand der Chip-Entwicklung ist es nicht möglich, einen Universal-Rechner softwaremäßig mit dem RSA-Algorithmus (bei Zugrundelegung von 200 Dezimalstellen) so zu programmieren, daß akzeptable Verschlüsselungsgeschwindigkeiten bzw. Verschlüsselungsraten erreicht werden.

Auch kann die RSA-Funktion (Potenzierung mit anschließender Modulo-Operation) nicht direkt in ein VLSI-Layout (VLSI = Very Large Scale Integration) umgesetzt werden, weil es keine direkten Potenzierschaltungen gibt. Die geschilderte Erkenntnis hat bereits seit mehreren Jahren zu dem Wunsch nach speziellen Hardware-Lösungen geführt, um die Potenzierung so in Einzelschritte zu zerlegen, daß eine hinreichende Verschlüsselungsgeschwindigkeit bzw.-Rate möglich ist.

Die heute bekannten Realisierungen der Public-Key-Code-Verfahren benötigen aber sehr viel Rechenzeit. Software-Lösungen haben Ver- bzw. Entschlüsselungsraten von 10 bis 20 Bit/sec. Auch erste bekannte Hardware-Lösungen erreichen nicht mehr als 1.200 Bit/Sec. Die einzige bisher realisierte Ein-Chip-Lösung stammt von Rivest (Rivest, R. L. "A Description of a Single-Chip Implementation of the RSA Cipher", Laboratory for Computer Science, MIT, Cambridge, Massachusetts, in "LAM—BDA Magazine 1", S. 14—18, Nr. 3, 1980). Bei diesem Vorschlag wurde eine relativ einfache Entwurfsmethode gewählt, die insbesondere darin besteht, daß mit einer herkömmlichen arithmetisch-logischen Elementarzelle eine 512 Bit breite arithmetisch-logische Einheit (ALU) konstruiert wurde. Diese arithmetisch-logische Einheit ist so aufgebaut, daß mit ihr sehr verschiedene Operationen ausgeführt werden können. Die in Kauf genommene Redundanz schlägt sich in einer Verschlüsselungsrate von 1.200 Bit/sec. nieder. Dabei ist eine 4 μm-NMOS-Technologie benutzt worden (Extrapoliert auf eine μm-CMOS-Technologie würde sich bei einer Schlüssel-Länge von 660 Bits eine Verschlüsselungsrate im Bereich von 2.500 Bit/sec. ergeben).

Diese Lösung ist in der Praxis allerdings nicht akzeptabel, da die Schnittstellen der digitalen Netze mit sehr viel höheren Datenraten arbeiten, z.B. arbeiten die ISDN-Schnittstellen mit 64 KBit/sec.

Es ist auch schon ein Kryptographie-Prozessor vorgeschlagen worden. der aus zwei Chips besteht, und mit deren Hilfe 336 Bit lange Zahlen des RSA-Algorithmus aufgearbeitet werden können (Rieden, R. F., J. B. Snyder, R. J. Widman and W. J. Barnard, "A Two-Chip Implementation of the RSA Public-Key Encryption Algorithm", Digest of Papers for the 1982 Government Microcircuit Applications Conference (November 1982), 24—27).

Der schnellste bekannte RSA-Prozessor ist mit dem Vorschlag von NEC/Miyaguchi gegeben (Miyaguchi, S., "Fast Encryption Algorithm for the RSA Cryptographie System", Proceedings COMPCON 82). Er arbeitet pro Zyklus 8 Bits des Multiplikators ab und erreicht dabei eine Geschwindigkeit von 29.000 Bits/sec. Da er aber für die praktische Ausführung die hohe Anzahl von 333 Chips benötigt, ist er in wirtschaftlicher Hinsicht natürlich völlig indiskutabel.

Ein genereller Nachteil der Mehr-Chip-Implementierungen besteht nicht nur in den proportional mit der Anzahl der erforderlichen Chips steigenden Hardware-Kosten, sondern vor allem in der fehlenden Gewähr für Sicherheit. Wenn die Signale, die von einem zum anderen Chip übertragen werden, zugänglich sind, so kann anhand der übertragenen Signale der Geheimcode gebrochen werden. Dehalb ist es aus Gründen der Kryptographie-Sicherheit wesentlich, daß alle Kryptographie-Algorithmen möglichst von einem einzigen Chip durch einen Tresor geschützt werden könnten.

In der DE—PS 32 28 018 ist ein Schlüsselsystem für RSA-Kryptographie beschrieben, welches ebenfalls einen extrem hohen Hardware-Bedarf erfordert. Im Vergleich mit dem ursprünglichen RSA-Algorithmus soll bei dem bekannten Schlüsselsystem die Verschlüsselungsrate um den Faktor 4 erhöht werden, was aber nur eine bescheidene Verbesserung darstellt. Zu diesem Zweck wird eine feste Anzahl von vier Bits gleichzeitig verarbeitet, wofür mehrere Multiplikatoren erforderlich sind, und wofür insgesamt 14 Addierer angegeben werden.

Theoretisch ist es zwar denkbar, daß der Prozessor für das bekannte Schlüsselsystem gemäß der DE—PS 32 28 018 viermal so schnell wie die direkte Verwendung des ursprünglichen RSA-Algorithmus ist, da aber die Signalwege sehr viel größer sind als bei einer Abtastung von jeweils einem einzigen Bit, ist in der Praxis kaum ein effektiver Zeitgewinn zu erwarten.

Auch ein gedanklich angenommener Universal-Chip mit einer 100-fachen Rechnerdichte wäre übrigens nicht in der Lage, den bekannten RSA-Algorithmus abzuarbeiten. Aus diesem Grunde käme, wenn überhaupt, nur ein Spezial-Kryptographie-Chip in Frage, allerdings würden sich dabei erhebliche Kühlprobleme einstellen, denn bei derartig hochspezialisierten Chips wären — im Unterschied zu Universalchips — sämtliche Transistorfunktionen fast ständig im Einsatz. Dies ist mit beträchtlichen Verlustleistungen verbunden, die wegen der angenommenen 100-fachen Rechnerdichte auch eine 100-fache (Verlust-) Leistungsdichte zur Folge haben würde.

Daß die damit verbundenen Kühlprobleme nicht unbeträchtlich sind, zeigt der aufwendige Vorschlag, die Kühlung mittels verflüssigter Edelgase durchzuführen, die durch im Silizium-Chip führende Bohrungen hindurchfließen. Andererseits ist zu berücksichtigen, daß sich als Folge einer ungenügenden Kühlung eine erheblich verkürzte Lebensdauer der Chips und eine erhöhte Fehlerquote bei den Verschlüsselungsoperationen ergibt. Außerdem würde er angenommene Universal-Chip mit der hohen Rechnerdichte von den räumlichen Abmessungen her so groß ausfallen, daß eine praktikable Anwendung außer Betracht bleiben müßte.

Hier grieft nun die Erfindung ein, der die Aufgabe zugrunde liegt, ein Kryptographie-Verfahren anzugeben, welches bei hinreichender Sicherheit eine so schnelle Rechengeschwindigkeit ermöglicht, daß eine kommerzielle praktikable Anwendung des an sich bekannten RSA-Verfahrens möglich ist. Außerdem soll durch ein Erfindung ein Kryptographie-Prozessor zur Durchführung des Verfahrens geschaffen werden, der die gestellten Anforderungen bei kleiner handlicher Bauweise bzw. Chip-Abmessungen ermöglicht.

Dieses Ziel erreicht die Erfindung verfahrensmäßig bei dem im Oberbegriff des Anspruchs 1 genannten Kryptographie-Verfahren durch die im kennzeichnenden Teil des Anspruchs 1 genannten Merkmale, wobei den Anforderungen einer digitalen Schnittstelle eines ISDN-Netzes genügt wird.

Ein wesentlicher Gesichtspunkt der Erfindung ist die neuartige Anwendung eines Look-Ahead-Algorithmus für die Division. Durch diesen Schritt wird es nämlich möglich, ein Look-Ahead-Verfahren auch bei der Multiplikation anzuwenden. Somit sind beim Abarbeiten mehrerer Bits nur einfache Additionen und Subtraktionen erforderlich, d.h. ein zusätzliches Multiplizieren kann entfallen.

Die Vorteile des neuen Verfahrens basieren also im einzelnen darauf, daß der gesamte Kryptographie-Algorithmus suksessive so weit in kleinere Schritte zerlegt wird, bis jeder Rechenschritt in einfacher Weise direkt mit einer Hardware-Auslegung korrespondiert.

Vorteilhafte Weiterbildungen und zeckmäßige Ausgestaltungen der Erfindung sind in den Unteransprüchen angegeben.

Jeweils bei der Gegenüberstellung der einzelnen Operationen zeigen sich bereits die Vorteile der erfindungsgemäßen Anordnung gegenüber dem Stand der Technik. Durch die Unwandlung des Exponenten-Algorithmus in eine Folge von Multiplikationen, wobei nach jeder einzelnen Multiplikation eine Modulo-Operation ausgeführt wird, wird verhindert, daß die Zwischenenergebnisse nicht, wie bei der Potenzierung üblich, ins Astronomische anwachsen (D und E haben je 200 Dezimalstellen).

Dadurch, daß darüberhinaus die Multiplikation in Einzelschritte zerlegt wird, bei der die Multiplikation in eine Folge von Additionen umgewandelt wird, kann die Berechnung schneller erfolgen. So wird zur Realisierung außerdem weniger Fläche auf dem Chip benötigt.

Die weiter unten erläuterte Reduktion der Modulo-Operation in eine Folge von Subtraktionen wird mit derselben Additionslogik berechnet, denn eine Subtraktion kann als Addition mit umgekehrten Vorzeichen behandelt werden.

Da die Multiplikation im Ring über N ausgeführt wird, kann bereits nach jeder Addition eine Modulo-Operation ausgeführt werden, Auch hierdurch werden große Zahlen vermieden und beträchtliche Rechenzeit eingespart. Sämtliche Zahlen jedes Schrittes sind nun kleiner als N. Auf diese Weise wird die

4

EP 0 239 749 B1

maximal erforderliche Größe des Speichers auf die Länge von N reduziert, was mit einer Halbierung der erforderlichen Chipfläche verbunden ist.

Beträchtliche Bedeutung für das Kryptographie-Verfahren liegt in der vorteilhaften Anwendung von Look-Ahead-Algorithmen, denn hierdurch wird die maximale Anzahl erforderlich werdender Additionen für die Multiplikationen und Subtraktionen für die Modulo-Operationen weiter beträchtlich reduziert. Das sich die Einführung der Look-Ahead-Algorithmen in einem Gewinn an Rechengeschwindigkeit auszahlt, ergibt sich aber erst durch die Einführung der erfindungsgemäßen neuen Look-Ahead-Algorithmus für die Modulo-Operation, denn die bloße Anwendung bekannter Look-Ahead-Algorithmen auf die Multiplikationen würde keinesfalls einen Zeitgewinn erbringen. Erst wenn die mittlere Reduktion des mit der Modulo-Operation verbundenen Rechenaufwands der mit der Multiplikation möglichen Rechenreduktion entspricht, ergibt sich ein optimaler Algorithmus, der die Rechenzeit auf etwa 1/3 reduziert. Diese vorteilhafte Einsparung an Rechenzeit hängt mit dem weiter unten noch erläuterten "Schwimmen" zusammen; während Z absolut verschoben wird, erfolgt die Verschiebung von N relativ zu Z, so daß die beiden Verschiebe-Raten voneinander entkoppelt sind.

Der letzte Vorteil in der Kette von Berfahrensschritten besteht in der Verknüpfung der sich aus der Multiplikation ergebenden Addition und der sich aus der Modulo-Operation ergebenden Subtraktion zu einer einzigen Operation, der 3-Operanden-Addition. Mit ihrer Hilfe braucht die Zykluszeit nicht erweitert zu werden, denn für die 3-Operanden-Addition wird die gleiche Zeit benötigt wie für eine einfache Addition. Hierdurch wird eine Verdoppelung der Rechengeschwindigkeit bewirkt.

Einerseits resultiert ein Zeitgewinn aus den vorteilhaften Anwendungen von mathematischen Transformationen auf die einzelnen Verfahrensschritte, andererseits ergeben sich aus der erfindungsgemäßen Architektur des Kryptographie-Prozessors weitere Verbesserungen. Durch die Organisation zu baumartigen Strukturen können die einzelnen Elemente gleichzeitig eine größere Anzahl von Informationen abarbeiten. Auch hierdurch wird die Rechenzeit weiter beträchtlich verkürzt.

Mit der erfindungsgemäßen Blockstruktur reduziert sich die Rechenzeit für eine 660-Bit-Addition auf die Länge einer 20-Bit-Addition.

Zusammenfassend ist festzustellen, daß der erfindungsgemäße Kryptographie-Prozessor die Ver- und Entschlüsselung mit einer Rate von 64.000 Bits pro Sekunde durchführt. Dies gilt auch für den ungünstigsten Fall, wo der Schlüssel die maximale Länge von 660 Bits aufweisen sollte.

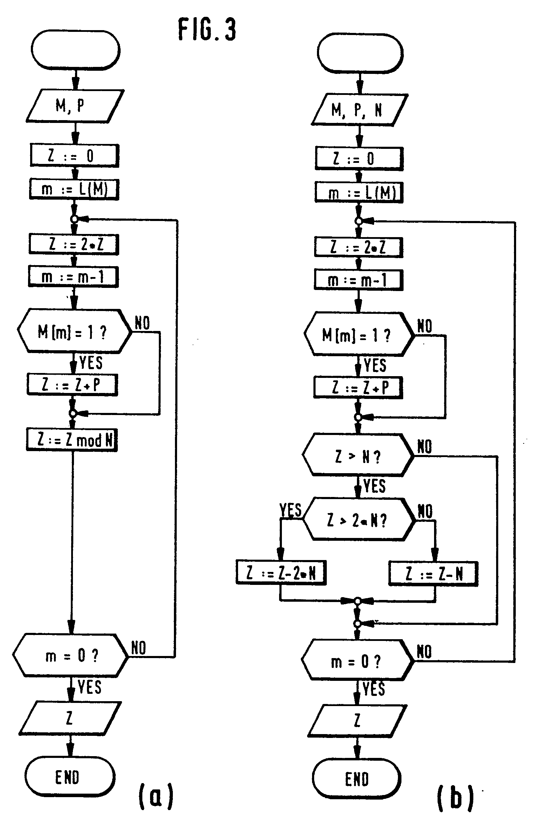

Die mit dem erfindungsgemäßen Kryptographie-Verfahren bzw. mit dem entsprechenden Kryptographie-Prozessor erzielbaren Vorteile werden augenscheinlich, wenn man seine "Über-alles-Effizienz" mit der einer Software-Implementierung, z.B. auf einem 16 Bit breiten Bit-Slice-Prozessor (BSP) vergleicht, der speziell auf die Verschlüsselungsaufgabe zugeschnitten worden ist: Heute erhältliche BSP's haben eine Taktfrequenz von ca. 10 MHz. Sie können in einem Zyklus zwei 16-Bit-Worte addieren bzw. substrahieren und gleichzeitig das Ergebnis um 1 Bit verschieben. Einen Barrel-Shifter haben sie nicht, so daß eine Shift-Operation seriell ausgeführt werden muß. Unter diesen Bedingungen hat ein Look-Ahead negative zeitliche Auswirkungen. Für die Zahl A der Zyklen zur Ausführung einer Operation wird angenommen, daß der BSP für jeden Schritt seiner Hauptschleife nur einen Zyklus benötigt. Sie besteht aus (vgl. Fig. 3):

1. $Z[i] := Z[i] + P[i]$ und
2. $Z[i] := Z[i] + -N[i]$, verschiebe $Z[i]$ um 1 Bit.

Das Mikroprogramm der BSP's kann so ausgelegt werden, daß sich die Schliefe auf den zweiten Schritt reduziert, wenn der erste aufgrund des Tests des entsprechenden Bits im Multiplikator entfallen kann. Da der erste Schritt mit einer Wahrscheinlichkeit von 1/2 ausgeführt werden muß, hat A einen Wert von 1,5. Für den Vergleich folgt:

$$\frac{V_{RSA,KP}}{V_{RSA,allg.}} = \frac{f_{KP}}{f_{BSP}} \cdot \frac{Erw(sz) \cdot L(N) \cdot A}{B} = \frac{30 \text{ MHz}}{10 \text{ MHz}} \cdot \frac{2,27 \cdot 660 \cdot 1,5}{16} \approx 421$$

Der Vergleich zeigt, daß der erfindungsgemäße Kryptographie-Prozessor selbst spezialisierten Abstimmungen aus Hard- und Software um mehr als zwei Größenordnungen überlegen ist. Ist der RSA-Algorithmus auf nomalen Rechenanlagen nur softwaremäßig implementiert, kann von Unterschieden im Bereich von 10.000 ausgegangen werden, da die Hauptschleife bei weitem nicht so effizient ausgeführt werden kann.

Verglichen mit dem eingangs erwähnten Rivest-Prozessor ergibt sich eine 50-fache Einsparung an Verschlüsselungszeit trotz einer um ca. 30% größeren Schlüssellänge. Diese gewaltige Steigerung der Über-Alles-Effizienz wurde sowohl mit der erfindungsgemäßen Anwendung neuer Verfahrensschritte als auch durch eine spezielle Chip-Architektur ermöglicht.

5

Der erfindungsgemäße Kryptographie-Prozessor arbeitet als sogenannter Coprozessor. Er besitzt zwei DMA-Kanäle für das Daten I/0 und einen 8 Bit breiten Datenbus. Die Kodier- under die I/0-Einheit arbeiten parallel. Er stellt eine "Kryptographie-Box" dar, bei der die Ver- und Entschlüsselungen von außen nicht beeinflußt werden können, bei der eine Signatur erzeugt wird, und zu der die Schlüssel nur im verschlüsselten Zustand übertragen zu werden brauchen.

Im folgenden wird das erfindungsgemäße Kryptographie-Verfahren und der darauf aufbauende Kryptographie-Prozessor, mit deren Hilfe Daten nach der Public-Key-Code-Methode von Rivest, Shamir und Adleman (RSA) verund entschlüsselt werden, anhand eines Ausführungsbeispiels näher beschrieben. Im ersten Teil der Beschreibung, der sich mit dem erfindungsgemäßen Kryptographie-Verfahren befaßt, werden die gegenüber dem ursprünglichen RSA-Verfahren gegebene Modifizierungen erläutert. Deshalb wird dabei häufig auf den ursprünglichen RSA-Algorithmus Bezug genommen. Da das weitere Ziel der Erfindung in der Realisierung des Verfahrens in einem effizienten VLSI-Layout besteht, bleibt es nicht aus, bereits bei der Beschreibung des Verfahrens auf die entsprechenden Hardware-Möglichkeiten hinzuweisen. Insbesondere werden komplexe Operationen soweit in Grundoperationen (Addieren, Subtrahieren, Verschieben usw.) zerlegt, bis sich jeder Schritt unmittelbar in den später folgenden VLSI-Entwurf umsetzen läßt. Deshalb spielt die Betrachtung des Algorithmus aus der Sicht der Hardware eine wichtige Rolle. Viele Schrittfolgen des RSA-Algorithmus werden durch vorteilhaftere ersetzt.

Da die Entschlüsselung mathematisch identisch mit der Verschlüsselung ist, wird deshalb im folgenden auf die beiden Vorgänge nicht gesondert eingegangen.

In der Zeichnung zeigen:

Fig. 1a ein Flußdiagramm eines Algorithmus für die Potenzierung für die Ent- oder Verschlusselung eines Datums nach dem ursprünglichen RSA-Verfahren,

Fig. 1b ein Flußdiagramm eines Algorithmus für die Potenzierung für die Ent- und Verschlüsselung des gleichen Datums gemäß Fig. 1a nach dem erfindungsgemäßen Verfahren,

Fig. 2 ein Flußdiagramm des seriellen Algorithmus für die in Fig. 1 erforderliche Multiplikation, wobei die Multiplikanten Elemente der natürlichen Zahlen sind,

Fig. 3a ein Flußdiagramm des Multiplikations-Algorithmus mit einem zusätzlichen Modulschritt, wodurch die Multiplikanten hier Elemente eines Restklassenringes über N sind,

Fig. 3b ein Flußdiagramm gemäß Fig. 3a, wobei die Modul-Rechnung auf eine Subtraktion reduziert ist,

Fig. 4 ein Flußdiagramm eines Look-Ahead-Algorithmus für die Multiplikation, der die Look-Ahead-Parameter seriell berechnet,

Fig. 5 ein Flußdiagramm eines Look-Ahead-Algorithmus für die Modulo-Operation, der die Look-Ahead-Parameter seriell berechnet,

Fig. 6a ein Flußdiagramm gemäß Fig. 1b, wobei die Multiplikation und anschließende Modulo-Operation zu einem MultMod-Schritt zusammengefaßt sind,

Fig. 6b ein Flußdiagramm des in Fig. 6a verwendeten erfindungsgemäßen MultMod-Verfahrens, ausgeführt mit Look-Ahead,

Fig. 7 eine Elementarzelle zur Realisierung einer MultMod-Schliefe in einem Schritt,

Fig. 8 die Zusammenfassung von vier Elementarzellen gemäß Fig. 7 zu einem 4-Zellen-Block mit einem hierarchischen Carry-Look-Ahead (CLA)-Element,

Fig. 9 die hierarchische Zusammenfassung von jeweils fünf 4-Zellen-Blöcken gemäß Fig. 8 zu einem 20-Zellen Block,

Fig. 10 eine vollständige Verschlüsselungseinheit mit mehreren 20-Zellen-Blöcken gemäß Fig. 9, sowie mit einer Steuereinheit,

Fig. 11 das Blockschaltbild eines Kryptographie-Prozessors,

Fig. 12 ein Blockschaltbild einer Steuereinheit gemäß Fig. 10 nach Vorgabe der Look-Ahead-Algorithmen gemäß Fig. 4 und 5,

Fig. 13 ein hierarchisches Carry-Look-Ahead-Element, wie es bei den 4-Zellen-Blöcken gemäß Fig. 8 zur Anwendung gelangt,

Fig. 14 die Verschaltung der Carry-Look-Ahead-Element gemäß Fig. 13 innerhalb der Hierarchie der 20-Zellen-Blöcke,

Fig. 15 ein Zustandsdiagramm bezüglich einiger Schrittfolgen des in Fig. 10 als Puffer zusgebildeten obersten 20-Zellen-Blockes,

Fig. 16 eine schematische Blockstruktur zur Verdeutlichung des Informationsflusses, und

Fig. 17 einen Floorplan der Anordnung von Elementarzellen auf einem Chip.

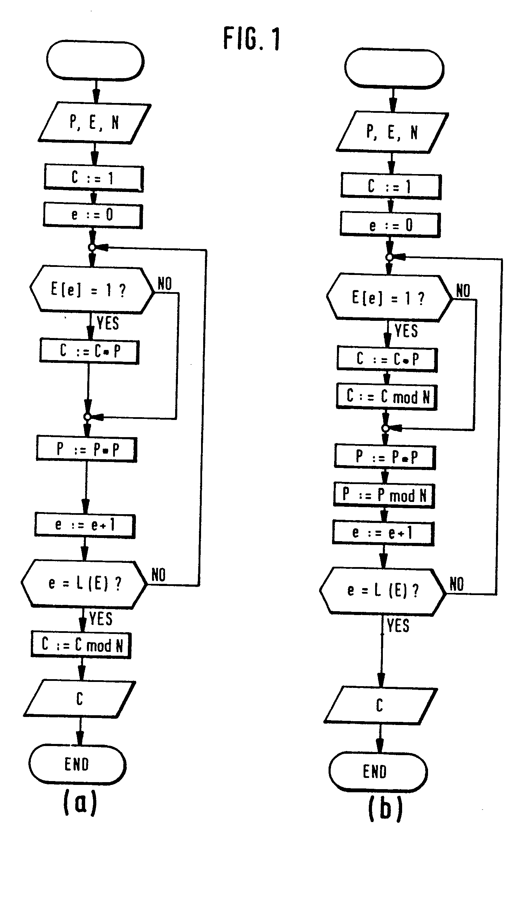

Unter Bezugnahme auf Fig. 1 wird nachfolgend zunächst er Verfahrensschritt für die Potenzierung erläutert. Bei der Zerlegung in einfache Grundoperationen wird die Potenzierung in durchschnittlich $1,5 \cdot L(E)$ Multiplikationen zerlegt. E ist der Exponent und $L(x)$ ist definiert als

$$L(x): = \text{Anzahl der binären Ziffern von } x.$$

Die Zeitkomplexität des Algorithmus ist $0(L(E))$. Seine Grundidee ist, den Exponenten binär darzustellen, also in eine Summe von Zweierpotenzen zu verwandeln. Mit den Potenzgesetzen wird die Summe im Exponenten in ein Produkt von Potenzen der zu potenzierenden Zahl P umgeformt. Die e-te Potenz hat als Exponent die e-te Zweierpotenz oder die Null, je nachdem, ob an der e-ten Stelle im

EP 0 239 749 B1

ursprünglichen Exponenten eine 1 oder eine 0 steht. Die Faktoren sind also Quadrate bzw. die Zahl 1.

$$P^E = P^{\sum_{e=0}^{L(E)-1} E_e * 2^e} = \prod_{e=0}^{L(E)-1} P^{E_e * 2^e}; E_e \, \varepsilon \, \{0,1\}$$

$$P^{2^{e+1}} = P^{2 * 2^e} = (P^{2^e})^2$$

Die Stelle des niederwertigsten Bits wird definitionsgemäß mit Null bezeichnet. Deshalb steht das höchstwertigste Bit an der Stelle L(E)—1.

Das (e+1)-te Quadrat läßt sich leicht durch Quadratur des e-ten berechnen. Es ist deshalb vorteilhaft, für das Produkt ein eigenes Register C zu reservieren. Der Inhalt von Register P wird dann in jedem Schritt quadriert und wieder darin gespeichert. Nach der Quadratur enthält P das e-te Quadrat, da nach dem (e−1)-ten Schritt in P das (e−1)-te Quadrat eingetragen worden war.

Im Zwischenregister C steht zu Beginn die 1. Steht im Exponenten E an e-ter Stelle eine 1, so wird im e-ten Schritt C mit P multipliziert und wieder darin gespeichert, andernfalls wird C nicht verändert. Da das Register P zu diesem Zeitpunkt das e-te Quadrat enthält, wird das obige Produkt, wegen der Gleichheit, P hoch E berechnet. Nach dem letzten Schritt steht das Ergebnis im Register C.

Das im Flußdiagramm der Fig. 1a dargestellte RSA-Vewrfahren enthält im oberen Teil den Potenzieralgorithmus. Im unteren Teil der Fig. 1a wird im letzten Schritt C mod N berechnet, d.h. der letzte Schritt des RAS-Algorithmus. Weil auf die Restklassenarithmetik während der Potenzierung verzichtet wurde, hat C bei großen Zahlen eine astronomische Stellenzahl angenommen.

Dies verhindert der in Fig. 1b dargestellte Algorithmus des erfindungsgemäßen Verfahrens. Er nutzt das Kongruenzgesetz

$$(a \bmod c) * (b \bmod c) \equiv (a * b) \bmod c.$$

Das jeweils entstehende Produkt wird durch die Modulorechnung auf den Repräsentanten der Restklasse abgebildet. Der Repräsentant ist das Element der Restklasse, das auch Element des Ringes ist. Dieses Element ist eindeutig, d.h. es gibt nur ein Element in jeder Restklasse, das die Bedingung erfüllt.

Bezogen auf den Algorithmus bedeuten
a, b Produkte aus dem Schritt e−1, und
c der Modul.

Die Aussage der Kongruenz ist: das Ergebnis der Rechnung im Schritt e fällt in dieselbe Restklasse,
a) wenn man die entstandenen Produkte aus dem Schritt e−1 auf ihre Repräsentanten abbildet und dann im Schritt e die Repräsentanten miteinander multipliziert oder
b) wenn man im Schritt e die Produkte aus dem Schritt e−1 miteinander multipliziert und dann dieses Produkt auf seinen Repräsentanten abbildet.

Der Fall a wird im rechten Algorithmus (Fig. 1b) bei jedem Schleifendurchlauf auf die Produkte angewandt. Der Fall b ist im linken Algorithmus (Fig. 1a) realisiert, allerdings nur ein einziges Mal als letzter Schritt des Algorithmus. Durch die ständige Abbildung haben die benutzten Register im rechten Algorithmus eine planbare Größe bekommen. Die Zahlen, die sie speichern müssen, sind maximal doppelt so lang wie die Länge des Modulus. Dies ist der Fall in dem Zeitraum zwischen Multiplikation und der Modulorechnung.

Die einzelnen Schritte des umgeformten Algorithmus lassen sich auf der Ebene der Potenzierung nicht weiter zerlegen. Es besteht auch nicht mehr die Notwendigkeit dafür. Die Chip-Fläche, die die Potenzierung benötigt, hat durch die ständige Modulorechnung eine obere Grenze erhalten.

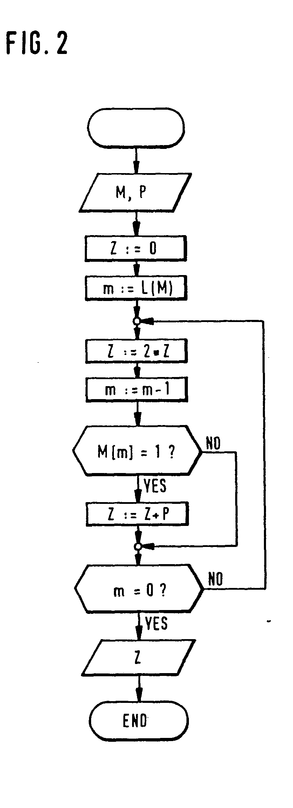

Nachfolgend wird nun unter Bezugnahme auf Fig. 2 der Verfahrensschritt für die Multiplikation erläutert. Bei dem erfindungsgemäßen Verfahren wird die Multiplikation durch einen seriellen Algorithmus gelöst. Er zerlegt die Multiplikation in L(M) Shift-Operationen und durchschnittlich $0{,}5 \cdot L(M)$ Additionen. Mit "M" ist im folgenden der Multiplikator bezeichnet.

Der Platzbedarf hängt linear von L(M) ab, denn für diesen Algorithmus ist eine Arithmetik-Logic-Unit (ALU) der Größe L(M) vorgesehen, so daß die Addition in einem Schritt geschieht. Das gleiche gilt dann auch für die Shift-Operation. Beide benötigen daher eine konstante Zeit für ihre Operation. Zudem kann die Addition parallel zur Shift-Operation ausgeführt werden. Daraus folgt für die Zeitkomplexität

$$T_{Mul} = L(M) * \max(T_{Shift}, T_{Add}) = c * L(M).$$

Sie hängt, wie der Platzbedarf, linear von der Länge von M ab. Wenn der benötigte Platz allerdings die Möglichkeiten der Integration überschreitet, d.h. M und damit L(M) einen bestimmten Wert überteigt, ist dieser Algorithmus nur in modifizierter Form verwendbar. Da dies bei der ins Auge gefaßten Größe von 660 Binärstellen (200 Dezimalstellen) nicht der Fall ist, wird dieses Problem in diesem Ausführungsbeispiel nicht diskutiert.

Der in Fig. 2 als Flußdiagramm dargestellte serielle Algorithmus für die Multiplikation baut, ähnlich wie der vorher anhand der Fig. 1 beschriebene Algorithmus für die Potenzierung, auf der Binärdarstellung

7

eines Eingabeparameters auf. Hier ist es der Multiplikator M:

$$P * M = P * \sum_{m=0}^{L(M)-1} M_m * 2^m = \sum_{m=1}^{L(M)} P * M_{L(M)-m} * 2^{L(M)-m}.$$

Die Multiplikation wird in Additionen zerlegt. P wird im Schritt m zum Zwischenergebnis Z addiert, wenn an der (L(M)-m)-ten Stelle im Multiplikator eine 1 steht, andernfalls bleibt Z unverändert. Danach wird die Schleife noch (L(M)-m)-mal ausgeführt. Wegen der Verdoppelung von Z zu Beginn jedes Schleifendurchlaufs wird die Summe Z+P des m-ten Schrittes (L(M)-m) mal verdoppelt. Das entspricht der Multiplikation mit der Zweierpotenz.

Zusammenfassend nutzt der Algorithmus aus, daß eine Multiplikation mit einer Binärziffer entweder den Multiplikanten selbst oder Null ergibt. Weiterhin führt er die in jedem Schritt erforderliche Multiplikation mit einer Zweierpotenz auf eine Verdoppelung von Z zurück. In der Binärdarstellung ist die Verdoppelung eine einfache Shift-Operation um ein Bit nach links (definitionsgemäß steht das niederwertigste Bit rechts).

Der Modulo-Verfahrensschritt ist schematisch in Fig. 3 dargestellt. Während der Potenzierung ist nach jeder Multiplikation eine Modulo-Operation auszuführen, um eine zum Produkt kongruente Zahl aus dem Restklassenring zu erhalten. Der in Fig. 2 beschriebene Algorithmus betrachtet die beiden Multiplikanten als Elemente der natürlichen Zahlen, nicht das Restklassenringes über N. Deshalb wird im Potenzieralgorithmus nach jeder Multiplikation ein Moduloschritt ausgeführt.

Nach dem erfindungsgemäßen Verfahren wird auch die Multiplikation in diesem Restklassenring ausgeführt. Dafür wurde der herkömmliche Algorithmus an einer Stelle verändert: Am Ende der Schleife wird das Zwischenergebnis Z auf seinen Repräsentanten abgebildet.

Das ist notwendig, weil Z erstens verdoppelt und zweitens P (im ungünstigsten Fall) zu ihm addiert wurde. Deshalb kann Z am Ende der Schleife Werte haben, die größer oder gleich des Modulus N sind.

Wird dagegen zum Schluß noch ein Moduloschritt hinzugefügt, hat Z nach dem Verlassen der Schleife immer Werte, die im erlaubten Zahlenbereich des Ringes liegen. Das Kongruenzgesetz, das es erlaubt, den Moduloschritt vom Potenzieralgorithmus in den Multiplikationsalgorithmus zu verlegen, lautet

$$(a \bmod c) + (b \bmod c) \equiv (a+b) \bmod c.$$

Wie bei der Potenzierung ist auch hier die Aussage der Kongruenz: das Ergebnis der Rechnung im Schritt m fällt in dieselbe Restklasse,

a) wenn man die entstandene Summe im Schritt m−1 auf ihren Repräsentanten abbildet und dann im Schritt m mit diesem weiterrechnet oder

b) wenn man im Schritt m zu der Summe aus dem Schritt m−1 etwas addiert und dann diese Summe auf ihren Repräsentanten abbildet.

Da die Multiplikation in eine Summenfolge umgewandelt wurde, lautet der Schluß: Es ergibt das gleiche Ergebnis, zwei Zahlen zu multiplizieren und dann diese die Modulorechnung auszuführen, oder nach jeder Addition in der zerlegten Multiplikation sofort Modulo zu rechnen.

Das Zwischenergebnis Z des in Fig. 3a dargestellten Flußdiagramms kann in der Schleife nicht beliebig große Werte annehmen, wenn es beim Schleifeneintritt einen kleineren Wert als N hatte

$$N > Z,P => 3 \wedge N > Z: = 2 \wedge Z + P.$$

In dem erfindungsgemäßen Verfahren ist die herkömmliche Modulorechnung durch eine einzige Subtraktion ersetzt.

Wenn Z am Ende der Schleife größer oder gleich N ist, wird lediglich N bzw. 2N von Z subtrahiert, und der Wert von Z ist wieder kleiner als N. Diese Schritte sind im Flußdiagramm der Fig. 3b enthalten.

Für die Subtraktion wird keine zusätzlich Logik benötigt, denn nach der Negation des Substrahenten wird sie zu einer Addition und ist mit der Additionslogik berechenbar:

$$a + b = a + (-b)$$

Eine Zahl wird negiert, indem jedes einzelne Bit negiert wird. Dazu muß abschließend noch die Zahl 1 addiert werden. Das ist im VLSI-Entwurf mit einem Inverter pro Bit realisierbar. Da jedoch in der Speicherzelle beide Informationen vorliegen, das Bit und das invertierte Bit, wird auf einen zusätzlichen Inverter verzichtet.

Bei der Addition zweier Zahlen wird an die niederwertigsten Bits kein Übertragsbit (Carrybit) übergeben. Soll nun substrahiert werden, werden die negierten Speicherbits an die Additionslogik angelegt und gleichzeitig wird den niederwertigsten Bits ein Carrybit signalisiert.

Dieser Verfahrensschritt, der die Multiplikation mit der Modulo-Operation in erfindungsgemäßer Weise miteinander verbindet, wird im folgenden MultMod genannt.

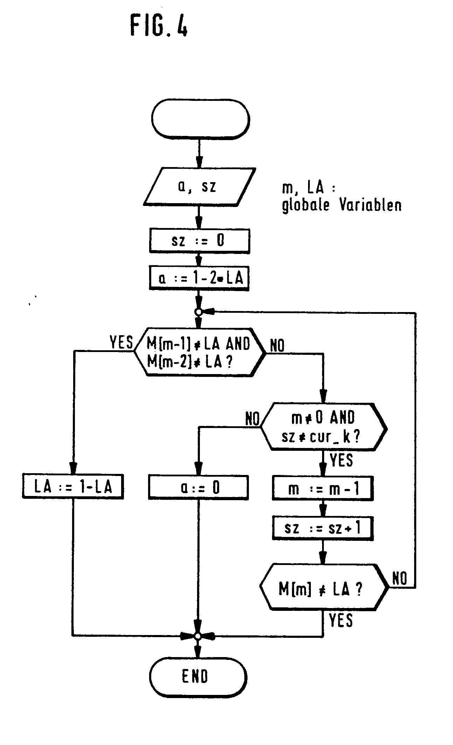

Die Erhöhung der Rechengeschwindigkeit durch Look-Ahead-Verfahren läßt sich anhand von Fig. 4 erläutern. Analysiert man den MultMod-Algorithmus und bedenkt die Möglichkeiten der Parallelisierung, so ergibt sich, daß viele Schritte umsonst ausgeführt werden. Genauer gesagt, ganze Schleifendurchläufe (Zyklen) können entfallen, wenn außer den beiden ersten, unabwendbaren Schritten keine der bedingten Schritte auszuführen sind.

Entfällt ein Zyklus, dann wird kein Schritt der Schleife ausgeführt, auch die unbedingten nicht. Dies muß bei dem nächsten, nicht ausgefallenen Zyklus bedacht werden. Zuerst muß jedoch berechnet werden, wieviel Zyklen übersprungen werden können. Sei nun $sz-1$ die Anzahl der übersprungenen Zyklen ("sz" ist der Schiebebetrag (Shift-Betrag) der Multiplikation und behält im folgenden diese Bedeutung). Mit dieser Information können die ersten beiden Schritte der überspungenen Zyklen im jetzigen Zyklus mitausgeführt werden ($sz-1$ übersprungene Zyklen plus dem aktuellen Zyklus ergibt sz Zyklen !):

1. Z wird nicht um 1 Bit (Verdoppelung), sondern um sz Bits nach links verschoben und
2. m wird nicht um 1, sondern um sz erhöht.

Das Verschieben um sz Bits ist mit einem Barrel-Shifter in einem Schritt machbar (Conway, L., Mead, C., Introduction to VLSI Systems, Adison-Wesley Publishing Company, Inc., 1980).

Methoden, die es ermöglichen, überflüssige Schritte zu überspringen, werden Look-Ahead (vorausschauende) Verfahren genannt. Solche Verfahren müssen nach sorgfältiger Analyse für jeden Algorithmus getrennt entworfen werden. Es muß vor allem geprüft werden, ob der zu erwartende Zeitgewinn größer ist als die Zeit zur Berechnung der überspringbaren Zyklen. Bei der angestrebten Hardware-Implementierung des gesamten Algorithmus wird der Zweitgewinn durch nichts geschmälert, da die Berechnung der Look-Ahead-Parameter parallel zum längsten Schritt, der Addition, geschieht.

Für die Multiplikation ist seit langem ein Look-Ahead-Algorithmus bekannt. Er hat zwei Zustände:

1. LA=0, Nullen im Multiplikator werden überlesen und
2. LA=1, Einsen im Multiplikator werden überlesen.

Die Schrittfolge des Algorithmus lautet:

1. Seite sz: = 1.
2. Setze m: = m + 1.
3. Setze a: = 1−2⋏ LA.
4. Es wird der 3-Bit-String M [L(M)-m.·L(M)-m-2] betrachtet. Solange nicht fertig, führe in Abhängigkeit vom 3-Bit-String und dem LA-Wert die in der Zeile stehende Regel aus:

| LA=0 | LA=1 | | |
|------|------|---|---|
| 000 | 111 | sz := sz+1; m := m+1. | |
| 001 | 110 | sz := sz+1; m := m+1. | |
| 010 | 101 | sz := sz+1; m := m+1 | |
| 011 | 100 | LA := 1-LA; Fertig. | (II, III) |
| 100 | 011 | Fertig. | (I, IV) |
| 101 | 010 | Fertig. | (I, IV) |
| 110 | 001 | Unmöglich! | |
| 111 | 000 | Unmöglich! | |

5. Im MultMod-Algorithmus ist auszuführen:
a. Schiebe Z um sz Bits nach links.
b. Setze Z: = Z + a ⋏ P.

Die römischen Zahlen in den Klammern hinter der "Fertig"-Anweisung benennen die Regeln dieser Zeile, die erste Zahl steht für LA=0 und die zweite für LA=1. Die 3-Bit-Strings, hinter denen "Unmöglich" steht, können nicht auftauchen, da bei ihnen bereits im Schritt davor die Regel II bzw. III zur Anwendung gekommen wäre. Die Variable "a" dient nur als Zwischenspeicher für die Information, ob P beim Additionsschritt negiert wird oder nicht. In diesem Schritt findet in der Implementierung keine Multiplikation statt, da a nur die Werte +1 und −1 annehmen kann. Das Verschieben von Z und die Erhöhung vom m ist vorher schon erklärt worden.

Die Look-Ahead-Regeln lassen sich leicht mit Hilfe der Summenzerlegung der Multiplikation verstehen. Sie lautet

$$P * M = \sum_{m=1}^{L(M)} P * M_{L(M)-m} * 2^{L(M)-m}.$$

"s" soll in dem folgenden Rechnungen die Stelle relativ zu L(M)-m bezeichnen, an der Multiplikator, von der Stelle L(M)-m-1 an gerechnet, das erste Bit ungleich LA steht.

Regel I besagt, wenn in einem 0-String eine isolierte 1 steht, dann addiere an dieser Stelle P zu Z. Mathematisch ausgedrückt:

$$\sum_{\lambda=1}^{m+s} P * M_{L(M)-\lambda} * 2^{L(M)-\lambda} = \sum_{\lambda=1}^{m} P * M_{L(M)-\lambda} * 2^{L(M)-\lambda} + \sum_{\lambda=m+1}^{m+s} P * M_{L(M)-\lambda} * 2^{L(M)-\lambda}$$

$$= 2^{L(M)-m} * Z + 2^{L(M)-m-s} * P.$$

Die Summanden der zweiten Summe sind Null außer den Wert Lambda = m+s, da an den Binärstellen L(M)-m-1.·L(M)-m-s des Multiplikator 00 ... 01 steht.

Regel II ist am einfachsten im Zusammenwirken mit Regel III zu verstehen. Regel II schaltet von einem 0-String auf einen 1-String um, wenn auf die erste 1 mindestens noch eine zweite folgt. An der Stelle der letzten 0 wird P zu Z addiert. Regel III ist zu II dual. Sie schaltet von einem 1-String zu einem 0-String um, wenn auf die erste 0 mindestens noch eine zweite folgt. An der Stelle der letzten 1 wird P von Z substrahiert. Sie s1 die Stelle der ersten 1 und s0 die Stelle der ersten darauf folgenden 0, beide relativ von m gerechnet, so ergibt sich:

$$\sum_{\lambda=1}^{m+s0} P * M_{L(M)-\lambda} * 2^{L(M)-\lambda} = \sum_{\lambda=1}^{m} P * M_{L(M)-\lambda} * 2^{L(M)-\lambda} + \sum_{\lambda=m+1}^{m+s1-1} P * O + \sum_{\lambda=m+s1}^{m+s0} P * M_{L(M)-\lambda} * 2^{L(M)-\lambda}$$

$$= 2^{L(M)-m} * Z + O + \sum_{\lambda=m+s1}^{m+s0-1} P * 1 * 2^{L(M)-\lambda}$$

$$= 2^{L(M)-m} * Z + 2^{L(M)-(m+s0-1)} * P * \sum_{\lambda=0}^{s0-s1-1} 2^{\lambda}$$

$$= 2^{L(M)-m} * Z + 2^{L(M)-(m+s0-1)} * P * (2^{s0-s1} - 1)$$

$$= 2^{L(M)-m} * Z + (2^{L(M)-(m+(s1-1))} - 2^{L(M)-(m+(s0-1))}) * P$$

Aus der letzten Zeile folgt direkt Regel II und III. Die Stellen zwischen den beiden Umschaltpunkten brauchen nicht beachtet zu werden, vorausgesetzt alle sind 1. Ein Beispiel soll dies anschaulicher machen.

```
     3  *           60      =            180
    11  * 00111100          = 10110100
         ^ ^       ^
         m s1      s0     L(M)=8, m=1, s1=2, s0=6
                          L(M)-m-s1 .. L(M)-m-s2+1  = 5..2
                          L(M)-m-s1+1               = 6

     3  * (32+16+8+4) = 3 * (64-4) = 180
```

Man spart zwei Additionen (somit zwei Zyklen), wenn man nicht ein Bit des Multiplikators nach dem anderen abarbeitet, sondern 1-String als geometrische Summe betrachtet, die Summe berechnet und die unwesentlichen Bits überspringt.

Bleibt noch Regel VI. Sie besagt, steht in einem 1-String eine isolierte 0, dann subtrahiere an dieser Stelle P von Z. Es ergibt sich:

$$\sum_{\lambda=1}^{m+s} P * M_{L(M)-\lambda} * 2^{L(M)-\lambda} = \sum_{\lambda=1}^{m} P * M_{L(M)-\lambda} * 2^{L(M)-\lambda} + \sum_{\lambda=m+1}^{m+s} P * M_{L(M)-\lambda} * 2^{L(M)-\lambda}$$

$$= 2^{L(M)-m} * Z + \sum_{\lambda=m+1}^{m+s-1} P * 1 * 2^{L(M)-\lambda} + 0$$

$$= 2^{L(M)-m} * Z + \sum_{\lambda=m+1}^{m+s-1} P * 1 * 2^{L(M)-\lambda} + P * (2^{L(M)-m-s} - 2^{L(M)-m-s})$$

$$= 2^{L(M)-m} * Z + \sum_{\lambda=m+1}^{m+s} P * 1 * 2^{L(M)-\lambda} - P * 2^{L(M)-(m+s)}$$

Aus der Sicht des Look-Ahead-Verfahren sieht as nach der Subtraktion von P an der Stelle L(M)−(m+s) so aus, als sei der 1-String nicht unterbrochen. Der Look-Ahead kann fortgesetzt werden.

Mit dem in Flußdiagramm der Fig. 4 dargestellten Look-Ahead-Algorithmus für die Multiplikation, der die Parameter seriell berechnet, ist gegenüber der Version ohne Look-Ahead kein Zeitvorteil zu erreichen, denn pro Zyklus kann nur ein Bit des Multiplikators getestet werden. Dieses Flußdiagramm dient daher auch nur der Umsetzung der Regeln in einen funktionierenden Algorithmus. Andererseits ist dieser Algorithmus für die Hardware-Implementierung vorgesehen, jedoch geschieht dann die Berechnung der Look-Ahead-Parameter in einem Schritt parallel zu den Operationen anderer Rechenwerke, so daß am Ende eines Zyklus sofort die Parameter für den nächsten bereitstehen.

In diesem Algorithmus kann der Shift-Betrag sz maximal den Wert cur_k annehmen (cur_k ist der "Name" einer Variablen). Der Shift-Betrag gibt die Anzahl der Stellen an, um die ein Register verschoben wird. Ein Maximum des Shift-Betrages wird von der Theorie nicht gefordert, wohl aber von der Praxis. Der Barrel Shifter der Z in einem Schritt in die berechnete Position schiebt, kann dies nur bis zu einem maximalen Betrag "k", der im Entwurf festgelegt werden muß. k ist der maximale Wert den cur_k annehmen kann. Der Wert von cur_k wird vom noch zu entwerfenden Modulo-Look-Ahead-Algorithmus festgesetzt.

Ist bis sz = cur_k keine Regel zur Anwendung gekommen, dann wird Z um k Bits nach links verschoben und a erhält den Wert 0, d.h. P wird weder addiert noch subtrahiert. Die in einem Schritt machbare Arbeit muß aus Kosten- und Platzgründen in mehrere aufgeteilt werden. Welcher Wert für k ein günstiger Kompromiß zwischen den Forderungen der Geschwindigkeitssteigerung und der Reduzierung des benötigten Platzes ist, wird in einem der folgenden Abschnitte geklärt.

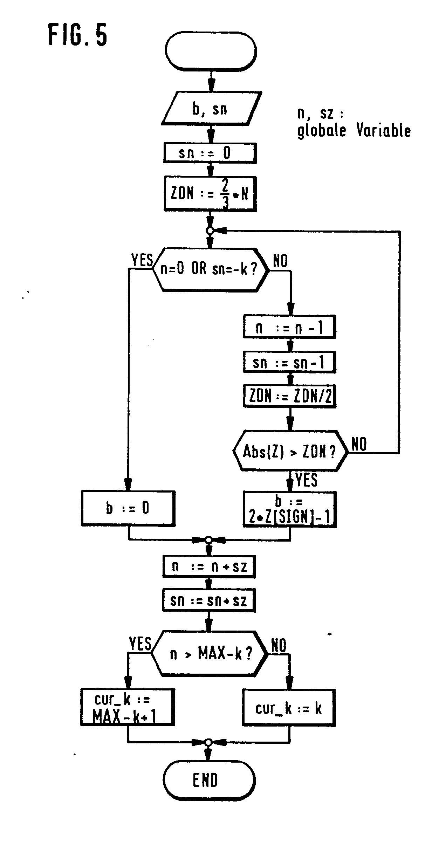

Es folgt jetzt die Look-Ahead-Erweiterung auf den Moduloschritt (Fig. 5). Da aus Gründen der Effizienz die Multiplikation in den Restklassenring verlegt wurde, nutzt die im vorigen Abschnitt gefundene Verbesserung der Multiplikation durch Look-Ahead wenig, wenn nicht auch für den Moduloschritt eine Methode zur Erzeugung von Look-Ahead-Parametern eingeführt werden kann. Sonst bremst der Moduloschritt den gesamten Ablauf, da er nach wie vor nur ein Bit pro Zyklus abarbeiten kann. Das Verfahren ist außerdem einer Einschränkung unterworfen. Der Erwartungswert des Shift-Betrages pro Zyklus sollte annähernd übereinstimmen mit dem des Multiplikations-Algorithmus. Ist dies nicht der Fall, bremst ein Look-Ahead-Algorithmus den anderen.

Der erfindungsgemäße Algorithmus, der die geforderten Bedingungen erfüllt, und die genannten Regeln zu einem Algorithmus zusammenfaßt, ist im Flußdiagramm der Fig. 5 dargestellt. Wie zuvor, ist auch dieser Algorithmus aus denselben Gründen seriell beschrieben. In der Hardware-Implementierung hat er dieselben Eigenschaften wie der Look-Ahead-Algorithmus der Multiplikation.

Die Rahmenbedingungen für den Modulo-Look-Ahead-Algorithmus verlangen, daß die Erwartungswerte beider Beträge, um die pro Zyklus verschoben wird, übereinstimmen. Bisher wurde N nicht verschoben: Z ist in jedem Zyklus um ein Bit nach links verschoben worden und N relativ dazu um ein Bit nach rechts, d.h. N behielt seine Position bei. Dagegen wird das Look-Ahead-Verfahren einen Parameter sn generieren, der angibt, um wieviel Bits N relativ zu Z nach rechts zu verschieben ist. "sn" ist im folgenden der aktuelle Shift-Betrag des Modulo-Look-Ahead-Algorithmus, und "n" gibt an, wieviel Binärstellen N zum jeweiligen Zeitpunkt absolut nach links verschoben ist. Im Register N stehen demnach Vielfache des Moduls N. Deshalb wird Z am Ende der MultMod-schleife meistens kein Restklassen-Repräsentant sein. Es können drei Fälle eintreten:

1. sn>sz: N wird absolut um sn−sz Stellen nach rechts verschoben. Es müß Vorsorge getroffen werden, daß n nicht kleiner als 0 wird, da sonst mit Bruchteilen von N und nicht mit Vielfachen von N gerechnet wird. Dies zerstört die Kongruenz. sn wird deshalb so berechnet, daß der Wert von n minimal 0 wird.

2. sn=sz es ist nichts zu beachten.

3. sn<sz: N wird absolut um sz−sn Stellen nach links verschoben. Wenn die Möglichkeit besteht, daß n im nächsten Schritt einen bestimmten, eingestellten Wert MAX übersteigt, muß der Multiplikations-Look-Ahead-Algorithmus derart gebremst werden, daß n auf jeden Fall einen Wert kleiner oder gleich MAX annimmt. So wird verhindert, daß n beliebig groß wird.

Im Algorithmus von Fig. 5 ist am Schluß die Begrenzung des maximalen Shift-Betrages von Z zu sehen. cur_k wird so gesetzt, daß im ungünstigsten Fall (sz = cur_k und sn = 1) des nächsten Schrittes n gerade den Wert MAX annimmt.

Ein Look-Ahead für die Modulorechnung erfordert, unabhängig von den eingesetzten Regeln, daß mit Vielfachen von N gerechnet werden kann. Der Vorteil ist, daß sich die Multiplikation und die Modulorechnung im allgemeinen nicht gegenseitig behindern. Eine Behinderung tritt nur dann ein, wenn im oben aufgeführten Fall 1 oder Fall 3 der Wert von sn bzw. sz für einen Schritt nach oben begrenzt wird. Ein Nachteil ist, daß die Register größere Zahlen als die des Moduls speichern müssen. Für diesen Überlauf muß im VLSI-Entwurf ein Puffer vorgesehen werden.

Dieser Nachteil gilt aber nur für zwei Register: Z und N. Außerdem ist die Puffergröße durch MAX nach oben begrenzt. Der VLSI-Entwurf kann also weiterhin von konstanten Größen aller Register und nun auch des Puffers ausgehen. Welche Größe der Puffer haben sollte, damit die Erwartungswerte nicht zu sehr sinken, wird in einem folgenden Abschnitt besprochen.

Es müssen noch die Berechnungsregeln der Look-Ahead-Parameter beschrieben werden. Dazu wird die Zahl ZDN benötigt. Sie ist definiert als zwei Drittel des Wertes vom Register N:

$$ZDN: = \frac{2}{3} * N.$$

Der Algorithmus lautet:
1. Setze sn: = 0.
2. Setze b: = 0.
3. Solange der Absolutbetrag von Z kleiner oder gleich ZDN ist, führe aus:
   a. Setze sn: = sn + 1,
   b. setze n: = n − 1 und
   c. schiebe ZDN um 1 Bit nach rechts, d.h. dividiere ZDN durch 2.
4. Setze b: = 2 ⩘ Z [Vorzeichen] − 1. Wenn das Vorzeichenbit den Wert 0 hat, dann ist Z positiv, andernfalls ist Z negativ.
5. Im MultMod-Algorithmus ist auszuführen:
   a. Schiebe N um sn Bits relativ zu Z nach rechts und
   b. setze Z: = Z + b ⩘ N, d.h. wenn Z positiv ist, dann wird N von Z subtrahiert, andernfalls wird N zu Z addiert.

Im letzten Schritt wird in der Hardware-Implementierung nicht multipliziert, da b nur die Werte −1, 0 und +1 annehmen kann: an die Additionslogik wird der Wert −N, 0 oder +N angelegt. Die Berechnung von ZDN bereitet auch keine Schwierigkeiten, denn ZDN wird nicht jedesmal neu berechnet, sondern nur ein einziges Mal bei der Schlüsselübergabe und wird dann derselben Shift-Operation unterworfen wie N. So bleibt die Relation N zu ZDN erhalten.

Nach der Schlüsselübergabe muß ZDN jedoch berechnet werden. Zwei Drittel binär dargestellt sind 0.101010101. Die Berechnung von ZDN geschieht demnach so:
1. Setze Z: = 0.
2. Setze Z: = Z + N.
3. Scheibe Z um 2 Bits nach links.
4. Springe zu Schritt 2 zurück, wenn ZDN noch nicht genau genug berechnet ist.

Der letzte Schritt enthält eine unscharfe Abbruchbedingung. ZDN ist genau bestimmt, wenn jedes Bit des Multiplikators "Zwei Drittel" abgearbeitet ist. Die Anzahl der Bits von "Zwei Drittel", die noch einen Einfluß auf den Vergleich von Z mit ZDN haben, ist dieselbe, wie die Anzahl der Bits, die der Komparator hat, für den Vergleich durchführt. Die Breite des Komparators wird wiederum durch die verlangte Genauigkeit des Vergleiches bestimmt. Wie im nächsten Abschnitt gezeigt wird, sind 10 Bits mehr als ausreichend. Daraus folgt, daß ZDN in wenigen Schritten berechnet werden kann.

Wie gerade erwähnt, werden von ZDN nur ein paar der höchstwertigsten Bits zum Vergleich mit Z benutzt. Dies bewirkt natürlich, daß der Komparator ab und zu ein falsches Ergebnis liefert, denn ein hundertprozentig sicherer Vergleich müßte alle L(N) Bits berücksichtigen. Dies ist aus Platzgründen nur schwer zu realisieren. Was aber viel schwerer wiegt, ist die Tatsache, daß die Vergleichszeit dann ähnlich groß wird wie die normale Additionszeit. Der korrekte Vergleich wäre also ein Phyrrussieg.

Welche Auswirkungen hat es aber, wenn der Komparator eine falsche Entscheidung getroffen hat? Dann hat sn im nächsten Zyklus den Wert 1, andernfalls hätte sn einen Wert größer als 1 gehabt. Es verschlechtert sich demnach der aktuelle Shift-Betrag des nächsten Zyklus auf den Wert 1. Beweis:

Wenn der Comparator richtige Ergebnisse geliefert hat, dann ist sn so bestimmt worden, daß

$$2^{-sn} * \frac{2}{3} * N < |Z| \leqslant 2^{-(sn-1)} * \frac{2}{3} * N$$

12

ist. N wird nun um sn Bits nach rechts verschoben, d.h. N wird durch 2 hoch sn dividiert. Dann wird N, wenn Z negativ ist, zu Z addiert, andernfalls wird N von Z subtrahiert. Daraus folgt, daß N vom Absolutwert von Z subtrahiert wird. Das Ergebnis wird wieder in Z abgespeichert.

$$\frac{2}{3} * N - N < |Z| - N \leq \frac{4}{3} * N - N$$

$$\frac{-1}{3} * N \leq Z' - \frac{1}{3} * N \tag{1}$$

$$O => |Z'| \leq \frac{1}{3} * N.$$

Da der Absolutwert von Z jetzt kleiner gleich einem Drittel von N ist, muß im nächsten Zyklus sn > 1 sein:

$$|Z| \leq \frac{1}{3} * N <=> |Z| \leq 2^{-1} * \frac{2}{3} * N = 2^{-1} * ZDN => sn > 1. \tag{2}$$

Teil 2 ist damit bewiesen.

Fällt dagegen der Komparator eine Fehlentscheidung, ist die Ungleichung I nicht erfüllt. Eine Fehlentscheidung wird z.B. dann getroffen, wenn ZDN durch Rundungsfehler bei der Berechnung etwas kleiner geworden ist als zwei Drittel von N. Liegt Z dann in der Nähe, aber noch unter von zwei Drittel von N, ist die Vergleichsaussage: ZDN ist kleiner als Z. Tatsächlich jedoch hätte diese Aussage erst eine Bitstelle später erfolgen müssen. Daraus folgt:

$$|Z| < \frac{2}{3} * N$$

$$Z' := |Z| - N < \frac{2}{3} * N - N = \frac{-N}{3}$$

$$=> |Z'| > \frac{N}{3}$$

Die Voraussetzung (1) ist nicht mehr erfüllt. Es folgt

$$|Z| > \frac{1}{3} * N <=> |Z| < 2^{-1} * \frac{2}{3} * N = 2^{-1} * ZDN => sn = 1. \text{ q.e.d.}$$

Die Auswirkungen eines Fehlers des Komparators sind also relativ harmlos. Das gibt dem Designer einen weiter Spielraum in der Wahl der Komparatorweite, denn eine geringe Breite erhöht durch fehlerhafte Vergleiche nur die Zyklenzahl, verfälscht aber nicht die Rechnung. So kann ein Komparator geringer Breite entworfen werden, der zwar häufiger irrt, aber aufgrund des sehr schnell vorliegenden Ergebnisses trotzdem noch einen Geschwindigkeitsgewinn bringt.

Für diese Abwägung muß die Fehlerwahrscheinlichkeit bekannt sein. Ein Fehler ereignet sich entweder durch Rundung im letzten Bit von ZDN oder in Bits, die niederwertiger sind als das niederwertigste Komparatorbit. Sei "d" die Komparatorbreite, dann ist die Fehlerhäufigkeit Epsilon

$$e := P(Fehler) \leq \frac{1}{2^d}.$$

Anschaulich formuliert besagt der Ausdruck, daß nur dann ein Fehler eintreten kann, wenn alle höherwertigen Bits den Vergleich nicht entscheiden konnten. Das ist bei einer von $2^d$ Zahlen der Fall.

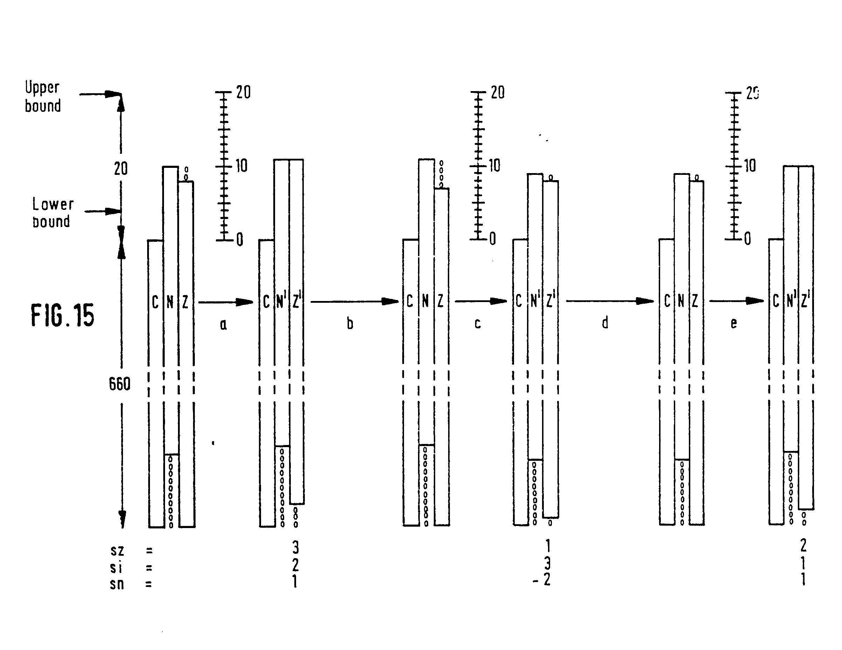

Da ausschließlich die wahrscheinlichkeitstheoretischen Erwartungswerte der Look-Ahead-Verfahren übereinstimmen, wurden sie notwendigerweise durch den MultMod-Algorithmus voneinander entkoppelt. Dabei wird in jedem Zyklus Z absolut und N relativ zu Z verschoben. Diese Entkopplung wird hier "Schwimmen" genannt, und nachfolgend im Zusammenhang mit Fig. 15 näher erläutert.

Der Zustand, in dem sich der Kryptographie-Prozessor jeweils befindet, ist anhand der Schritte a bis e in Fig. 15 dargestellt. Die Übergänge a, c und e verdeutlichen den Verschiebevorgang, während b und d richt näher erläuterte Additionen oder Subtraktionen bedeuten. Die gezeigten Rechtecke (Türme) repräsentieren die Register C (14), N (18) und Z (20, 22, 24; Register des Kryptographie-Prozessors). Die Höhe der Rechtecke beträgt 660 Bits + 20 Bits. 660 Bits ist die maximale Wortlänge, und 20 Bits ist die Größe eines Puffers, der die Entkopplung ermöglicht.

Wenn beispielsweise der Schiebebetrag (Shift-Betrag; Größe der Verschiebung) der Multiplikation größer als der Schiebebetrag der Modulo-Operation ist, wird das Register M um die Differenz der Schiebebeträge zum oberen Ende geschoben (vgl. Schritte a und e); die obersten Bits des Registers N werden somit teilweise in den Puffer hineingeschoben.

Im umgekehrten Fall wird N zum unteren Ende geschoben (Schritt c). Die Überwachung, daß N nicht aus den Puffergrenzen hinausläuft, wird weiter unten noch näher erläutert.

Vor dem Schritt a sei N bereits um 10 Bits in den Puffer geschoben worden. Der Schiebebetrag sz nimmt dann die Werte "3", "1" und "2" an, wie unten in Fig. 15 zu erkennen ist. Dabei werden die genannten Werte in diesem Beispiel nacheinander angenommen. Der Schiebebetrag si, welcher die Verschiebung von N relativ zu Z festlegt, nimmt hier nacheinander die Werte "2", "3" und "1" an, das bedeutet, daß N absolut gesehen um sn = sz − si verschoben worden ist, also ist sn nacheinander "1", "−2" und "1". Nach den Schritten a, c und e ist N jeweils um 11, 9 bzw. 10 Bits in den Puffer verschoben worden. Dieser Vorgang stellt das dar, was weiter oben mit dem Begriff "Schwimmen" bezeichnet wurde.

Im Schritt c ist der Einfluß der Look-Ahead-Grenze k für den Fall von k = 3 verdeutlicht. Obwohl der Algorithmus für si eine Verschiebung um 4 hätte vornehmen können, ist N relativ zu Z nur um 3 Bits verschoben worden, und im Schritt e dann um 1 Bit. Daher ist N im Schritt d von Z weder addiert noch subtrahiert. Das bedeutet also, daß das Vorzeichen b in Fig. 5 den Wert "0" angenommen hat.

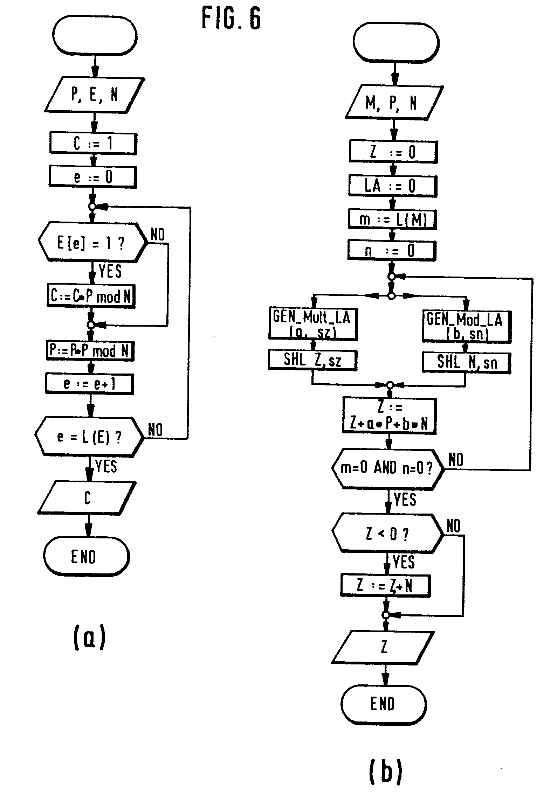

Nachfolgend wird der Verfahrensschritt der 3-Operanden-Addition erläutert. Die Fig. 6 stellt das komplette RSA-Verfahren (Fig. 6a) dem nunmehr vollständigen Ausführungsbeispiel des erfindungsgemäßen Kryptographie-Verfahrens gegenüber (Fig. 6b).

Hier sind die Abfragen, die in der letzten Fassung des MultMod-Algorithmus (Fig. 3) noch enthalten waren, durch die Aufrufe der beiden Look-Ahead-Algorithmen ersetzt. Die Berechnung der Look-Ahead-Parameter geschieht parallel. Das soll durch die parallelen Zweige, in denen die Aufrufe stattfinden, ausgedrückt werden.

In dieser Version des Algorithmus kann in Z ein negativer Wert stehen, nachdem die Schleife abgearbeitet worden ist. Deshalb muß zum Schluß im MultMod-Algorithmus mit Look-Ahead eine Ergebniskorrektur vorgenommen werden. Sollte Z negativ sein, dann ist Z + N positiv. Dieser Zusatzschritt ist im Flußdiagramm von Fig. 6b enthalten.

Der Multiplikations- und der Moduloschritt sind außerdem zu einem einzigen Schritt zusammengefaßt worden, der 3-Operanden-Addition. Es werden von der Logik pro Schritt nicht zwei, sondern drei Operanden gleichzeitig addiert, wie dies nachfolgend zu erkennen ist.

```
             A [i]
            +B [i]
            +C [i]
            _____

           S[1]S [0]  = 0..3
                 |    |
                 ↓    |
 X [max+1]........X[i+1]...|............... 0
   0    .............Y [i]............. Y[0]
```

Die 3-Operanden-Addition wird in zwei Abschnitte unterteilt. Im ersten Abschnitt wird an jeder binären Stelle eine Summe der drei Bits der Operanden A, B und C gebildet. Die Summe von A[i], B[i] und C[i] kann die Werte 0.3 annehmen, sie ist also binär mit den zwei (1) Bits S [1] und S[0] darstellbar. Da die Summe an jeder Stelle gebildet wird, können aus den zwei Summenbits zwei neue Zahlen X und Y zusammengestellt werden (i = 0 bis max):

Y [i] : = S [0], Y [max+1] : = 0 und
X [i+1] : = S [1], X [0] : = 0.

Im zweiten Abschnitt werden die beiden Zahlen auf die übliche Art und Weise addiert. Die Verlängerung um ein Bit bereitet keine Probleme, da das Ergebnis um mindestens ein Bit kürzer ist als der längste Operand.

Damit die Additionslogik nicht einen zu hohen Energieverbrauch hat, sind bei ihr an mehreren Stellen die Pullup-Transistoren weggelassen worden. Sie ist also in einem metastabilen Zustand. Kippt sie dann

14

bei der Addierung in einen stabilen Zustand, so kann sie diesen nicht mehr selbständig verlassen. Deshalb muß die Logik am Ende eines Zyklus mit einem externen Precharge-Signal wieder in den metastabilen Anfangszustand gebracht werden. Während dieses Zeitraums wird die Bitaddition eingeschoben.

Der Kryptographie-Prozessor

Dieser zweite Teil der Erfindungsbeschreibung befaßt sich mit dem Blockschaltbild und dem daraus resultierenden Floorplan des Prozessors.

Eine Teilaufgabe der Erfindung besteht darin, die Struktur einer spezialisierten Elementarzelle (10), die den RSA-Algorithmus optimal unterstützt, darzustellen. Mit dieser Struktur wird das Blockschaltbild des Prozessors festgelegt. Dieses enthält genügend Informationen, um einen darauf abgestimmten Floorplan des Prozessors entwerfen zu können.

Wie wird der RSA-Algorithmus effizient unterstützt? Um diese Frage zu beantworten, müssen die einzelnen Schritte des Algorithmus auf die Eigenschaft überprüft werden, ob sie selten ausgeführt werden und/oder wenig Zeit benötigt ober ob das Gegenteil zutrifft. Im ersten Fall ist es sinnvoller, die Schritte durch Mikroprogramm zu realisieren. Bei den zeitkritischen Schritten dagegen muß die Hardware-Implementierung in die Elementarzelle verlegt werden. Es werden die folgenden Schritte auf der Ebene des RSA-Algorithmus ausgeführt (siehe Flußdiagramm in Fig. 6):

1. Die Initialisierung; den beiden Variablen C und e werden die Startwerte zugewiesen.
2. Die Schleife; in ihr gibt es zwei Abfragen und die dadurch induzierten Sprünge, zwei Aufrufe des MultMod-Algorithmus und die Inkrementierung der Variablen e.

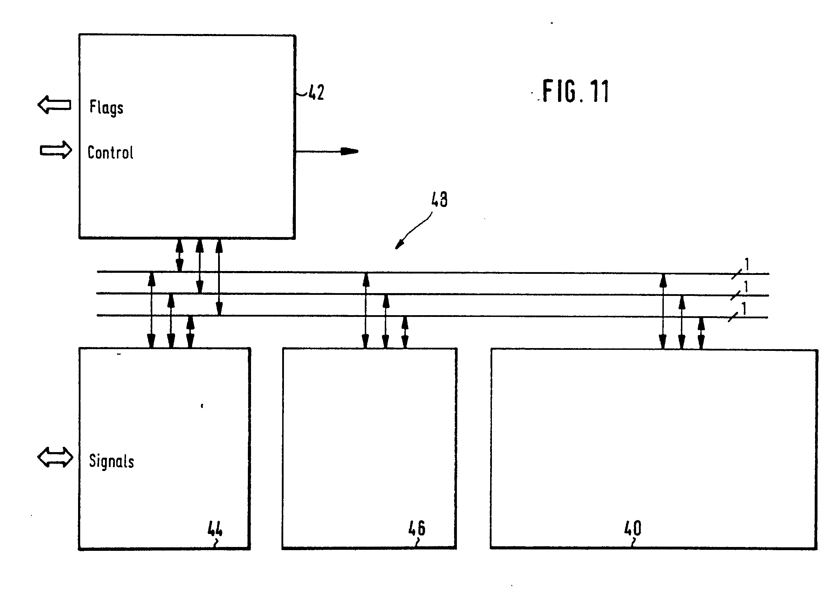

Jeder der aufgelisteten Schritte wird entweder während der Berechnung nur einmal ausgeführt, oder die Operation beschränkt sich auf wenige Bits, z.B. die binäre Abfrage eines Exponentenbits. Außerdem sind es einfache Operationen und benötigen daher kaum Rechenzeit. Die Schritte werden also durch ein Mikroprogramm realisiert. Eine einfache Steuereinheit 42 wird dieses Problem ausführen (Fig. 11).

Die Variablen, die mit einem kleinen Buchstaben bezeichnet sind, haben alle eine Zählerfunktion. Sie arbeiten eng mit der Steuereinheit 42 zusammen, da dessen Entscheidungen von den Zählern abhängen und andererseits die Zähler in Abhängigkeit der Entscheidungen der Steuereinheit de- bzw. inkrementiert werden. Sie müssen deshalb in enger Nachbarschaft zur Steuereinheit plaziert werden. Dies ist möglich, da deren Länge einen Wert von ld(L(M)) Bits hat (ld = Logarithmus Dualis). Bei einer Schlüssellänge von 660 Bits sind sie 10 Bits lang.

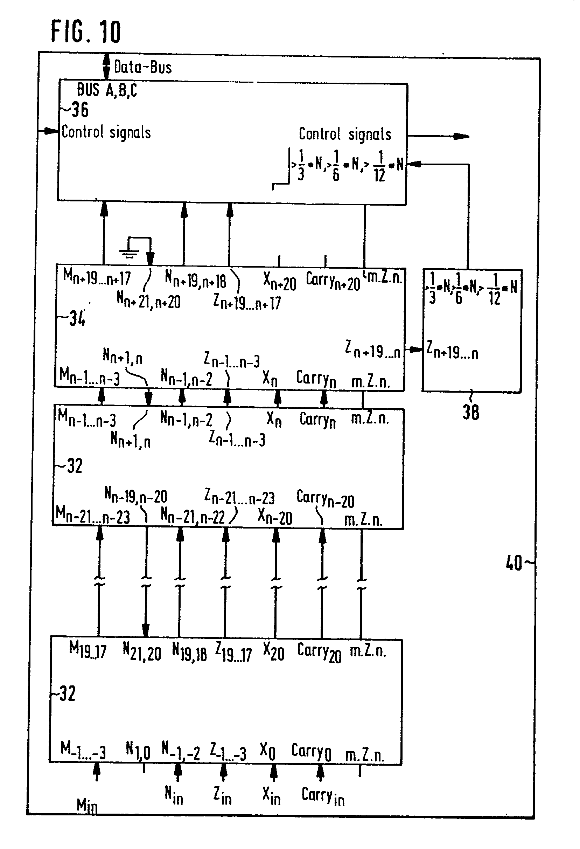

Dieselben Argumente sind für die Abfragen und die Zähler des MultMod-Algorithmus gültig. Allerdings werden diese Aufgaben von einer separaten anderen Steuereinheit 36 (Fig. 10) übernommen, da die Berechnung der Look-Ahead-Parameter sehr zeitkritisch im Hinblick auf den Ablauf der MultMod-Berechnung ist. Die rechtzeitige Generierung der Shift-Beträge sz und sn sowie der Information, ob und mit welchem Vorzeichen P und N in die 3-Operanden-Addition eingeht, beeinflußt die Zykluszeit wesentlich.

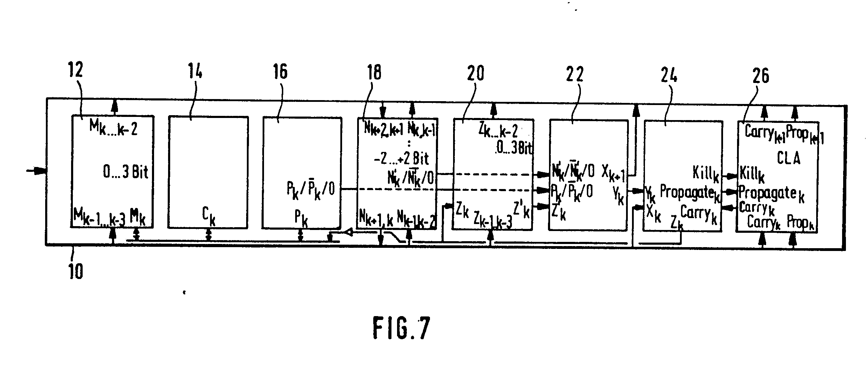

Nicht in diese Steuereinheit gehören die Operationen, die mit den L(N) Bit langen Zahlen durchgeführt werden. Für ihre Speicherung in nächster Nähe der ausführenden Logik sowie für die Logik selbst wurde eine Elementarzelle (Fig. 7) entworfen.

Die benötigten Register und die Logik der Elementarzelle 10 ergeben sich aus Fig. 7. Danach umfaßt die Elementarzelle 10 ein Register 12, welches einen Multiplikator M enthält, sowie ein Code-Register 14 und ein Datum-Register 16. Es folgt ein UD-Shift-Register 18, welches N enthält und −2 . . . +2 Bit schiebt.

Weitere Bestandteile der Elementarzelle 10 sind ein Barrel-Shifter 20, ein Bitaddierer 22, sowie ein Volladdierer 24, an den sich ein Carry-Look-Ahead-Element 26 anschließt.

Im RSA- und MultMod-Algorithmus werden zusammen fünf Register benötigt:

1. Das Register 12 für den jeweiligen Multiplikator M; die Länge des Registers ist L(N).
2. Das Register 14 für das verschlüsselte Datum; in ihm steht während der Berechnung die Variable C, deren Wert nach Abarbeitung des RSA-Algorithmus das Ergebnis der Verschlüsselung ist. Die Länge des Registers ist L(N).
3. Das Register 16 für das zu verschlüsselnde Datum; in ihm steht während der Berechnung die Variable P, die zu Beginn des RSA-Algorithmus den Wert des zu verschlüsselnden Datums zugewiesen bekommt. Die Länge des Registers ist L(N).
4. Das Register 18 für den Modul N; in ihm steht während der Berechnung ein Vielfaches des Moduls. Daher hat das Register die Länge L(N) + MAX. Dieses Register hat außer der Speicherfunktion die Fähigkeit die Variable N in einem Schritt um mehrere Stellen zu verschieben. N wird in jedem Zyklus um sn Stellen relativ zu Z nach rechts verschoben. Gleichzeitig wird Z um sz Stellen nach links verschoben, d.h. N wird absolut um sn-sz Stellen nach rechts verschoben. sz und sn können die Werte 1 . . 3 annehmen (der maximale Look-Ahead k wurde auf den Wert 3 festgesetzt). Der absolute Shift-Betrag, um den N nach rechts verschoben wird, nimmt also die Werte −2 . . . 2 an. Ein negativer Shift-Betrag nach rechts bedeutet, daß N nach links verschoben wird. In Anlehnung an ein LR-Shift-Register wird die geforderte Funktion mit dem UD-Shift-Register (UpDown) 18 realsisiert, das in jedem Halbzyklus in jeder Richtung um 1 Bit verschieben kann, in einem Vollzyklus also um 2 Bits.
5. Das Register Z (umfassend 20, 22, 24) für das Zwischenergebnis Z des MultMod-Algorithmus; dieses Register wird zum Beginn jedes Zyklus ausgelesen und am Ende mit dem neuen Zwischenergebnis beschrieben. Das Register muß also nur für eine kurze Zeit die Variable Z speichern. Am einfachsten wird diese Funktion durch die dynamische Speicherung jedes Bits von Z auf dem Eingangsgate eines Inverters realisiert. Die Länge des Registers ist L(N) + MAX, da das Register 18 diese Länge hat und Z dessen Wert annehmen kann. Das Register Z ist als Bestandteil des Volladdierers 24 aufzufassen.

Die drei ersten Register 12, 14 und 16 werden als statische Speicher entworfen, da sie über längere Zeiträume Informationen speichern müssen.

Neben den besprochenen Registern gehört in den Elementarzellenentwurf:

1. Ein Barrel-Shifter 20, der das Ergebnis der Addition, das Zwischenergebniz Z, um 0..3 Bits verschieben kann. Die Einbeziehung des 0-Bit-Shift in die Fähigkeiten des Barrel-Shifters ist notwendig, da die Multiplikation vor der Modulorechnung fertig wird und dann Z nicht (!) mehr verschoben werden darf.

2. Ein Bitaddierer 22 ohne Übertragungsbit (Carrybit), der die 3 Operandenbits in eine mit zwei Bits darstellbare Summe umwandelt.

3. Ein Volladdierer 24; so wird ein 2-Bit-Addierer bezeichnet, der das Carrybit der nächstniederen Stelle verarbeitet und selbst ein Carrybit für die nächsthöhere Stelle generiert.

4. Nachfolgend wird das Multiplizieren in dem Ausführungsbeispiel erläutert. Die Additionslogik hat einen lesenden Zugriff auf die Register 16, 18 und 20, 22, 24, und sie kann in jedes Register eine Zahl abspeichern. P (Register 16) ist in jedem MultMod-Aufruf des RSA-Algorithmus einer der beiden Faktoren. Wird P immer als Multiplikant gewählt und der andere Faktor als Multiplikator, dann genügt es, wenn die Elementarzellenlogik nur die Register 16, 18 und Z (20, 22 und 24) auslesen kann, um die erforderlichen Shift-Operationen und die 3-Operanden-Addition ausführen zu können.

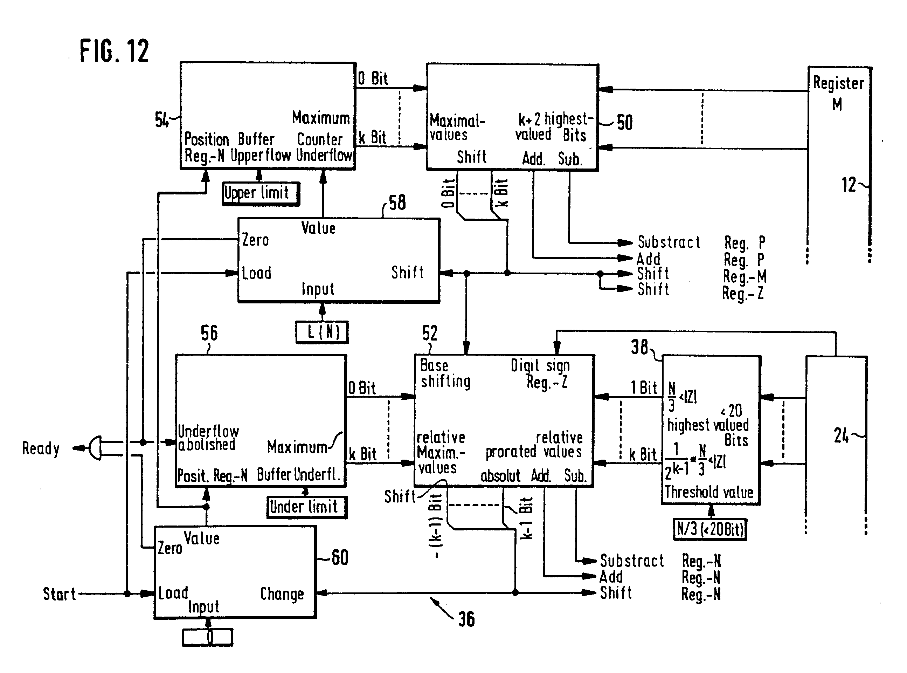

5. Die MultMod-Steuereinheit 36 (Fig. 10) löst die Detailaufgabe, die Look-Ahead-Parameter zu generieren. Aus diesem Grund wird der Multiplikator M im Register 12 parallel mit dem Register Z verschoben. Die MultMod-Steuereinheit 36 hat Zugriff auf die obersten Bits des Registers 12 (vgl. Fig. 12). In Abhängigkeit dieser Bits generiert die MultMod-Steuereinheit 36 den Schiebeparameter sz, der aber nicht direkt ausgegeben wird, sondern in entsprechende Steuersignale umgesetzt wird. Diese Vorgänge laufen in Fig. 12 in der Multiplikations-Schiebelogik 50 ab.

Entsprechend wird der Verschiebeparameter sn in der Modulo-Schiebelogik 52 generiert. Ein Vergleicher 38 vergleicht die oberen Bits von sz mit 1/3, 1/6, 1/12 ... von N. Entsprechend dem Algorithmus aus Fig. 5 wird das Vergleichsergebnis an die Modulo-Schiebelogik 52 geliefert. Dieser Wert gibt den relativen Betrag an, um den das Register 18 relativ zu Z nach rechts verschoben wird. Die Modulo-Schiebelogik 52 generiert aus diesem relativen Wert und dem Schiebebetrag der Multiplikations-Schiebelogik 50 den absoluten Schiebeparameter sn. Wiederum wird sn nicht ausgegeben, sondern gleich in entsprechende Steuersignale umgesetzt.

Die in Fig. 12 dargestellten Begrenzer 54 und 56 haben die Aufgabe, den Schiebebetrag sz oder sn zu begrenzen, falls das Register 18 die Puffergrenzen überschreiten sollte, was weiter oben schon erwähnt wurde. Die Signale des ersten Begrenzers 54 und des zweiten Begrenzers 56 werden von der Multiplikations-Schiebelogik 50 unter Modulo-Schiebelogik 52 mit verarbeitet.

Der erste Zähler 58 in Fig. 12 enthält die Variable m (vgl. Fig. 6b), die angibt, wieviel Bits des Multiplikators im Register 12 noch zu bearbeiten sind. Der zweite Zähler 60 enthält die Variable n (vgl. Fig. 6b bzw. Fig. 5), die angibt, um wieviele Bits das Register 18 (N) in den Puffer hineingeschoben worden ist.

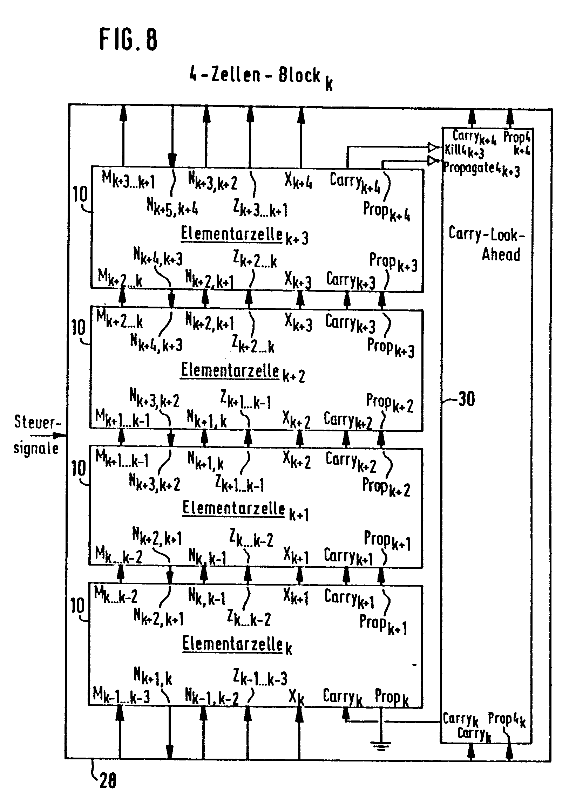

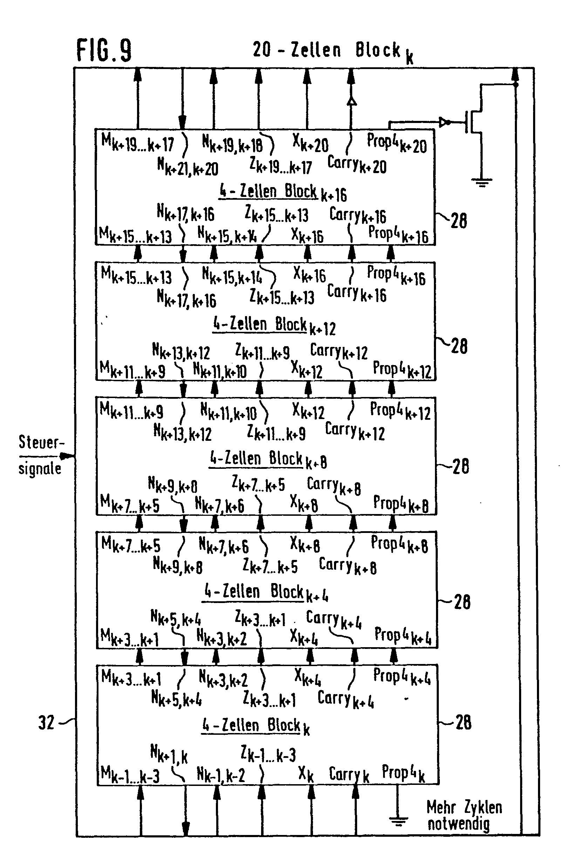

Nachdem in Fig. 7 eine Elementarzelle 10 dargestellt ist, zeigt Fig. 8 wie in einem hierarchischen Aufbau aus mehreren Elementarzellen 10 ein 4-Zellen-Block 28 mit einem hierarchischen Carry-Look-Ahead-Element 30 aufgebaut wird. Gemäß Fig. 9 sind fünf 4-Zellen-Blöcke 28 in einer weiteren Stufe zu einem 20-Zellen-Block 32 aufgebaut, und wie Fig. 10 zeigt, sind in einem weiteren hierarchischen Aufbau mehrere 20-Zellen-Blöcke 32, von denen der oberste als Puffer 34 ausgebildet ist, zu einer Verschlüsselungseinheit 40 mit einer MultMod-Steuereinheit 36 zusammengefaßt.

Eine gemäß Fig. 7 aufgebaute Elementarzelle 10 ist in der Zusammenarbeit mit der MultMod-Steuereinheit 36 in der Lage, alle Schritte der Mult-Mod-Schleife gemäß Fig. 6b in einem Zyklus zu erledigen, da sie für jeden Schritt der Schleife (Verschieben des Modulus N um mehrere Bits im Register 18 (N); Verschieben des Registers Z (20, 22, 24) um mehrere Bits im Barrel-Shifter 20; Ausführung der 3-Operanden-Operation mittels des Bitaddierers 22 und des Volladdierers 24 und der Carry-Look-Ahead-Einheit 26) eine spezielle Logik enthält. Die MultMod-Steuereinheit 36 berechnet (Fig. 12) parallel zur Arbeit der Elementarzelle 10 die Parameter des nächsten Zyklus. Damit ist die direkte Umsetzung des erfindungsgemäßen Verfahrens in dem VLSI-Entwurf des Kryptographie-Prozessors gegeben.

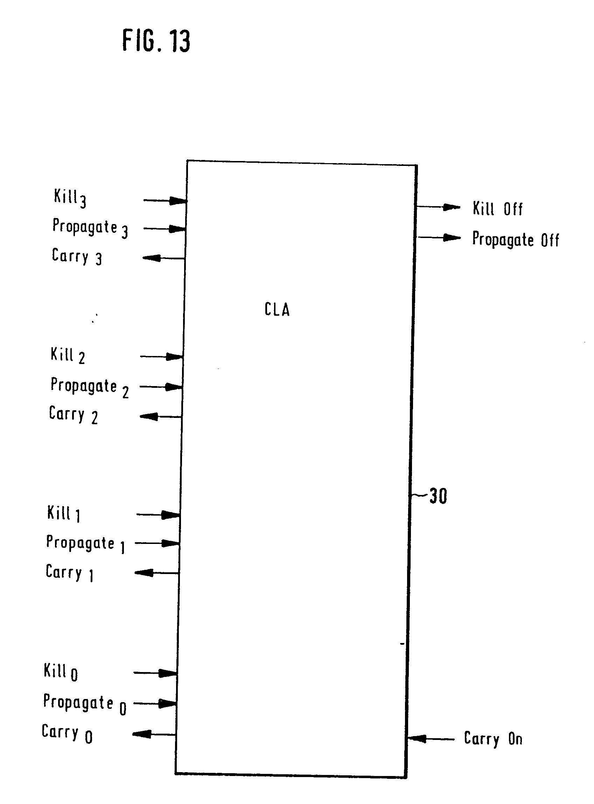

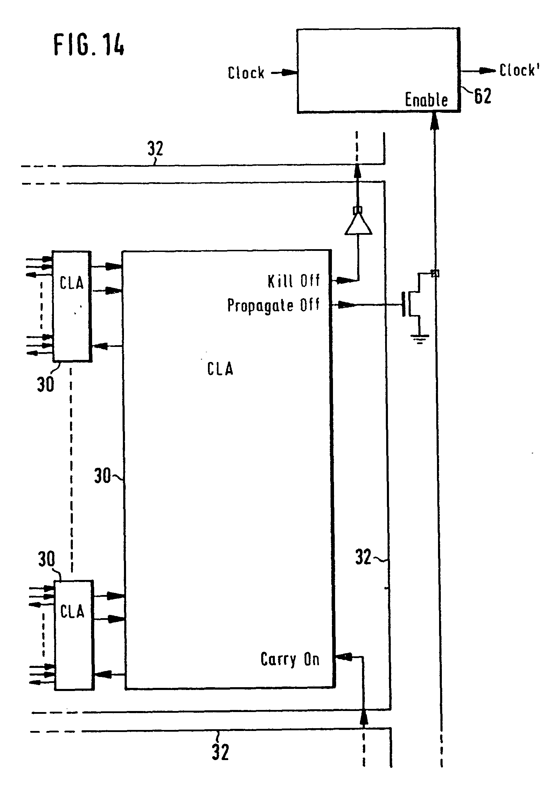

Gemäß Fig. 13 und 14 wurde ein Carry-Look-Ahead-Element 30 entwickelt, welches erkennt, ob sich Carry-Bits über größere Distanzen beeinflußen. Da dies im Kryptographie-Prozessor bei der gewählten Lösung nur in einem von 30.000 Fällen so ist, bestimmt nicht mehr die Dauer der längsten (niederwertigstes Carry-Bit beeinflußt das höchstwertigste), sondern der durchschnittlichen Additionszeit die Zykluszeit der Additionslogik.

Das Carry-Look-Ahead-Element (CLA) 30 ist hierarchisch aufgebaut. Es verarbeitet die CLA-Signale der untergeordneten Stufe (linke Seite) und generiert ein CLA-Signal für die übergeordnete Stufe (rechte Seite).

Ein Propagate-Signal einer Position bedeutet, daß der Übertrag dieser Position vom Übertrag der nächsniedrigeren Position bestimmt wird. Wenn alle Propagate-Signale akativiert sind, generiert das hierarchische Carry-Look-Ahead-Element 30 das Propagate-Ausgangssignal dieses Elements. Ein Kill-Signal besagt, daß diese Position keinen Übertrag hat. Das Kill-Ausgangssignal wird aktiviert, wenn in den untergeordneten Elementen entscheidbar ist, daß die höchstwertige Position dieses Elements keinen Übertrag hat.

16

EP 0 239 749 B1

Die Carry-Look-Ahead-Elemente 30 können nach einem Baukastenprinzip zu einer Baumstruktur zusammengestreckt werden. Sie repräsentieren dann jeweils eine größere Anzahl von Carry-Bits. Der Vorteil der CLA ist, die serielle Abarbeitung der Carry-Bits durch eine parallel-serielle (baumartige) Abarbeitung zu ersetzen. Dadurch wird die Additionszeit erheblich reduziert.

In der Realität vervielfacht sich mit jeder zusätzlich benötigten Stufe allerdings die Länge der Signalpfade, so daß ab einer bestimmten Baumtiefe die Zusammenfassung benachbarter Bäume keinen Gewinn mehr erbringt. Bei den Wurzeln dieser Bäume wird der Übertrag dann wieder seriell verarbeitet.

Letzteres ist in Fig. 14 zu erkennen, welche die Verschaltung der Carry-Look-Ahead-Elemente 30 in Verbindung mit einem Unterbrecher 62 zeigt. Innerhalb eines Blockes von 20 Bits werden die Überträge durch den CLA-Baum verarbeitet. Von Block zu Block wird der Übertrag seriell weitergereicht.

Dieses Konzept ist im Kryptographie-Prozessor 48 noch geringfügig erweitert. Das nutzlos gewordene Block-Propagate-Signal wird dazu verwendet, den Unterbrecher 62 zu aktivieren, der die Taktsignale für die Dauer von 8 Takten unterdrückt. Dies ist die Zeit, die ein Übertrag durch die gesamte serielle Blockkette benötigt.

Wird also der Übertrag eines Blockes vom nächstniederwertigen Block bestimmt, ist das Block-Propagate-Signal durch dioe Block-CLA automatisch aktiviert. Der Unterbrecher 62 wird eingeschaltet, und die Blockkette erhält genügend Zeit, sich korrekt einzupegeln.

Die Zykluszeit kann daher so eingestellt werden, daß sie gerade ausreicht, den Übertrag direkt benachbarter Blöcke zu verarbeiten. Der Vorteil hierbei ist sehr groß, da unabhängig von der Anzahl der Stellen nur die Zeit eines Block-Übertrages berücksichtigt zu werden braucht. Die Dauer der Berechnung einer 660-Bit-Addition ist daher nicht länger als die einer 20-Bit-Addition. Lediglich in einem von ungefähr 30.000 Fällen beeinflußen sich die Carry-Bits über mehr als zwei Blöcke hinweg. Dies erkennt die CLA. Die Addition benötigt dann nicht einen, sondern acht Zyklen.

Aus der Zerlegung des RSA-Algorithmus in Grundoperationen und ihre Umsetzung in eine erfindungsgemäße Schaltung kann die absolute Schrittzahl berechnet werden, die zur Verschlüsselung eines Datums (Nachricht) notwendig ist. Daraus direkt ableitbar ist die Verschlüsselungsrate in allgemeiner Form $V_{RSA, allg.}$, ausgedrückt in codierten Bits pro Sekunde:

$$V_{RSA,allg.} = f \cdot \frac{L(N)}{3/2 \cdot L(N) \cdot \frac{L(N)}{\min(Erw(sz),Erw(sn))} \cdot L(N) \cdot \frac{A}{B}}$$

$$= f \cdot \frac{2}{3} \cdot \frac{\min(Erw(sz),Erw(sn))}{L^2(N) \cdot \frac{A}{B}} \left[ \frac{Bit}{Sekunde} \right] \cdot$$

Sie ist
proportional zur Frequenz f des Prozessors,
proportional zur Anzahl der Bits L(N), die zusammen verschlüsselt werden,
umgekehrt proportional zur Anzahl $3/2 \cdot L(N)$ der MultMod-Aufrufe
umgekehrt proportional zur Anzahl L(N)/min (Erw(sz), Erw(sn)) der Additionen bzw. Subtraktionen je MultMod-Aufruf und
umgekehrt proportional zur Anzahl L(N)·A/B der Einzelschritte, in die die Addition bzw. Subtraktion einer großen Zahl zerlegt wird. B ist die Breite der ALU (je breiter die ALU ist, desto weniger Operationen sind zur Addition zweier Langwortzahlen notwendig) und A ist die Addition der Zyklen zur Ausführung einer Operation.

Für den neuen Kryptographie-Prozessor ist Erw(sz) = Erw (sn) und A/B = 1/L(N), weil die Datenbreite der ALU gleich der Länge der zu verschlüsselnden Daten ist und die ALU-Operation nur einen Zyklus benötigt. Daraus folgt in diesem Fall für die Verschlüsselungsrate des Kryptographie-Prozessors $V_{RSA,KP}$:

$$V_{RSA,KP} = f_{KP} \cdot \frac{2}{3} \cdot \frac{Erw(sz)}{L(N)} \left[ \frac{Bit}{Sekunde} \right]$$

$$f_{KP} \simeq 30 \text{ MHZ}, \quad Erw(sz) \simeq 2,27, \quad L(N) = 660 \text{ Bits}$$

$$= V_{RSA,KP} \simeq 68,7 \left[ \frac{kBit}{Sekunde} \right] \cdot$$

Die Frequenz von 30 MHz ergibt sich aus einer Extrapolation einer in 5 μm-NMOS-Technologie erreichten Zykluszeit von 100ns (ein als Labormuster hergestellter Prototyp besteht aus ca. 5.000 Transistoren in 5 μm-NMOS-Technologie) auf heute gängige 2 μm-CMOS-Technologien.

Aufgebaut ist das beschriebene Ausführungsbeispiel des erfindungsgemäßen Kryptographie-Prozessors aus ca. 80.000 Transistoren in 2 μm-CMOS-Technologie. Die Chipfläche beträgt dann 5,2 mm × 5,2 mm. Bei der maximalen Schlüssel-Länge von 660 Bits ver- und entschlüsselt er im ungünstigsten Fall Daten immer noch mit einer hohen Geschwindigkeit von 64.000 Bit/sec.

17

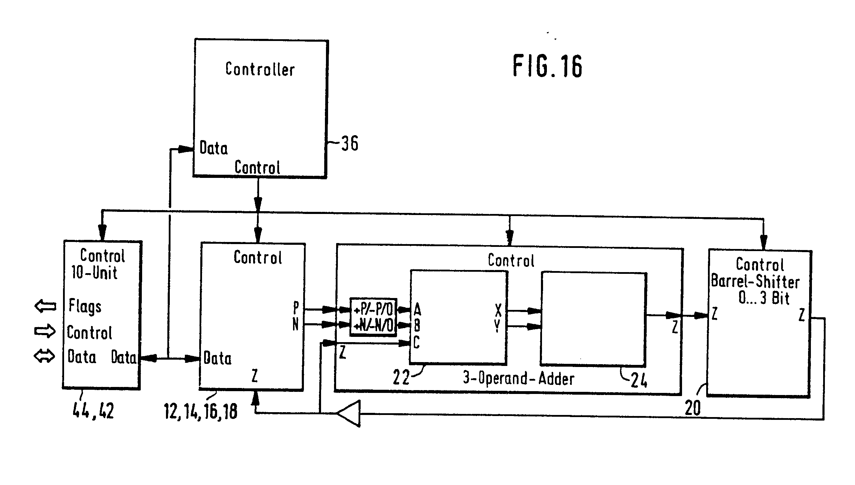

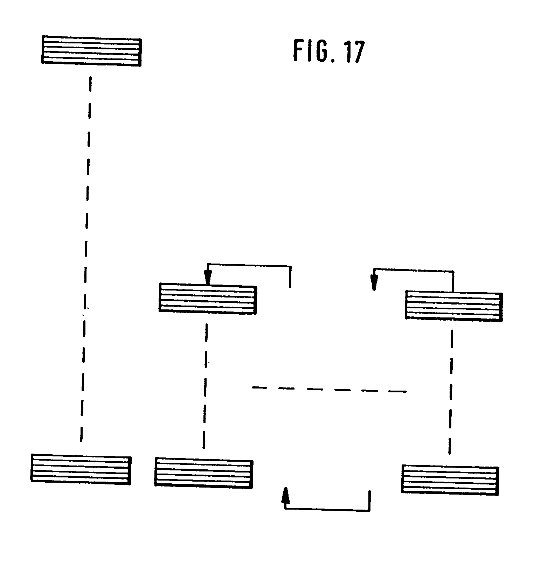

Die logische Blockstruktur und der Floorplan ergeben sich aus Fig. 16 und Fig. 17. Fig. 16 zeigt das Blockschaltbild des Kryptographie-Prozessors 48, das sich unmittelbar aus den vorangegangenen Erläuterungen der Elementarzelle 10 ableiten läßt.

Bei der Konzeption des Floorplans gemäß Fig. 17 sind verschiedene Rahmenbedingungen zu beachten: Zum einen die Struktur der Elementarzelle 10, weiterhin die Kommunikation der Elementarzellen untereinander und schließlich die Gewährleistung des Anschlusses aller erforderlichen Steuersignale an die Elementarzellen.

Vier Komponenten der Elementarzelle 10 tauschen mit den entsprechenden Komponenten benachbarter Elementarzellen Informationen aus. Das ist erstens das UD-Shift-Register 18 (vgl. Fig. 7), zweitens der Bitaddierer 22, drittens der Barrel-Shifter 20 und viertens der Volladdierer 24. Das impliziert, das die einzelnen Komponenten der Elementarzelle übereinander plaziert werden, denn dann entstehen keine zusätzlichen Kommunikationswege zu benachbarten Elementarzellen. Aus der relativ hohen Anzahl der Komponenten folgt, daß die Elementarzelle der gewählten Ausführungsform des Prozessors eine geringe Bauhöhe und eine große Breite hat.

Obwohl die Elementarzelle flach ist, ergibt ihre notwendige Stapelung einen schmalen hohen Turm, wie links in Fig. 17 zu sehen ist. Aus fertigungstechnischen Gründen werden möglichst quadratische Chips angestrebt. Deshalb wird der Turm in einzelne Stapel aufgeteilt, die dann nebeneinander plaziert werden (Fig. 17 rechts). Jeder zweite Stapel steht auf dem Kopf, weil dann die Elementarzellen, die vorher an der Trennlinie übereinander benachbart waren, zu seitlichen Nachbarn werden. Die benötigten Informationen werden an der Ober- und Unterseite der Stapel zu den Nachbarzellen übertragen.

Die noch nicht plazierten Einheiten des Prozessors, Hauptsteuereinheit 42 und I/0-Einheit 44, benötigen im Verhältnis zur Verschlüsselungseinheit 40 so wenig Platz, daß sie an beliebiger Stelle an ihrem Rand plaziert werden können.

**Patentansprüche**

1. Kryptographie-Verfahren nach der Public-Key-Code-Methode von Rivest, Shamir und Adleman (RSA-Verfahren), umfassend die Anwendung der nachfolgenden Operationen zur Chiffrierung bzw. Verschlüsselung von Nachrichten:

Auswahl zweier großer Primzahlen p und q und einer weiteren großen Zahl E,

Bildung des Produktes $N = p \cdot q$,

Umwandlung der zu chiffrierenden Nachrichten in eine Kette von vorzugsweise gleichlangen Gliedern $P_i$, deren Werte als Zahl kleiner als der Wert der Zahl N sind,

Chiffrierung dieser Glieder durch die jeweilige Erhebung in die E-te Potenz mit anschließender Bildung von Modulo N, (d.h., es entstehen die Zahlen $C_i = P_i^E$ Modulo N),

wobei die Potenzierung durch eine Folge von Multiplikationen ersetzt wird und nach jeder Multiplikation sofort eine Modulo-Operation ausgeführt wird, (d.h., es wird im Restklassenring über N multipliziert),

wobei die Multiplikation in Einzelschritte zerlegt wird, so daß aus der Multiplikation eine Folge von Additionen entsteht, und

wobei die Modulo-Operation nach dem klassischen Divisionsalgorithmus durch eine Folge von Subtraktionen ersetzt wird, gekennzeichnet durch die Anwendung eines ersten Look-Ahead-Verfahrens (Vorausberechnungsverfahren) für die Division (Fig. 5), so daß auch die Multiplikation mit einem zweiten Look-Ahead-Verfahren (Fig. 4) durchführbar ist.

2. Kryptographie-Verfahren nach Anspruch 1, gekennzeichnet durch Look-Ahead-Algorithmen, mit denen die maximal notwendige Anzahl von Additionen bzw. Subtraktionen reduziert wird.

3. Kryptographie-Verfahren nach Anspruch 2, dadurch gekennzeichnet, daß das erste Look-Ahead-Verfahren für die Modulo-Operation so gewählt ist, daß der wahrscheinlichkeitstheoretische Erwartungswert der Anzahl der beim ersten Look-Ahead-Verfahren übersprungenen Operationen genau so groß ist wie der wahrscheinlichkeitstheoretische Erwartungswert, der beim zweiten Look-Ahead-Verfahren für die Multiplikation übersprungenen Operationen.

4. Kryptographie-Verfahren nach Anspruch 3, gekennzeichnet durch eine Entkopplung der beiden Look-Ahead-Verfahren, wobei jeder der beiden Look-Ahead-Verfahren einen Schiebebetrag (sz bzw. sn) erzeugt, der angibt, um wieviel Bits das Zwischenergebnis (Z) der Multiplikation bzw. der Modulus (N) pro Zyklus verschoben wird, wobei das Zwischenergebnis (Z) absolut um sz-Bits und der Modulus (N) relativ zum Zwischenergebnis (Z) um sn-Bits verschoben wird.

5. Kryptographie-Verfahren nach einem der vorhergehenden Ansprüche 1—4, gekennzeichnet durch die Zusamenfassung der Addition bzw. Subtraktion des Multiplikations- und des Modulo-Schrittes zu einer einzigen Operation (3-Operanden-Addition), wobei pro Schritt nicht zwei, sondern drei Operanden wie folgt addiert werden:

$$A \; [i]$$
$$+B \; [i]$$
$$+C \; [i]$$

$$S1 \qquad S0 \; = \; 0 .. \; 3$$

$$X \; [max \; + \; 1] \; .. X \; [i \; + \; 1] \dots\dots\dots\dots X \; [0] \; = 0$$
$$Y \; [max \; + \; 1] \; = 0 \; \dots\dots \; Y \; [i] \; \dots\dots\dots Y \; [0] \, ,$$

und wobei diese 3-Operanden-Addition in zwei Abschnitte unterteilt wird.

6. Kryptographie-Verfahren nach Anspruch 5, dadurch gekennzeichnet, daß der erste der beiden Abschnitte so gewählt ist, daß an jeder binären Stelle eine Summe der drei Bits der Operanden A, B und C gebildet wird, wobei die Summe von A[i], B[i], und C[i] zwischen 0 und 3 liegt, sie also binär mit den zwei Bits S1 und S0 darstellbar ist, und wobei aus den zwei Summenbits in folgender Weise zwei neue Zahlen X und Y zusammengestellt werden:

$$Y \; [i] \qquad\qquad := \; niederwertiges \; Bit \; von \; A \; [i] \; +B \; [i] +C \; [i] \, ,$$
$$Y \; [max+1] \qquad := \; 0,$$
$$X \; [i+1] \qquad := \; höherwertiges \; Bit \; von \; A \; [i] \; +B \; [i] \; +C \; [i] \; und$$
$$X \; [0] \qquad\qquad := \; 0.$$

$$(i \; = \; 0, \; \dots \; , \; max) \, .$$

7. Kryptographie-Verfahren nach Anspruch 5 und 6, dadurch gekennzeichnet, daß der zweite Abschnitt so gewählt ist, daß die Zahlen X und Y in an sich bekannter Weise mit Carry (Übertrag) addiert werden, und daß demgegenüber die Bitadditionen ohne Carry des ersten Abschnitts zu einem Zeitpunkt ausgeführt wird, in dem die normale Additionslogik durch ein Precharge-Signal (Vorbereitungssignal) auf den nächsten Zyklus vorbereitet wird.

8. Kryptographie-Verfahren nach Anspruch 7, dadurch gekennzeichnet, daß die Addition folgende Schritte umfaßt:

a) Aufteilung der langen bzw. großen Zahlen X und Y in kleine Blöcke (32),

b) Gleichzeitige Berechnung der Carry-Bits innerhalb der Blöcke (32) nach einem an sich bekannten Carry-Look-Ahead-Verfahren, und

c) Weitergabe des Carry-Bits je eines Blockes zum jeweils nachfolgenden Block, für den Fall, daß sich die Carry-Bits benachbarter Blöcke nicht beeinflussen.

9. Kryptographie-Verfahren nach Anspruch 8, dadurch gekennzeichnet, daß ein durch die Blöcke (32, Fig. 14) aktivierbarer Unterbrecher (62) vorgesehen ist, der für den Fall, daß sich Carry-Bits über benachbarte Blöcke hinaus beeinflussen, die erforderliche Zeit für deren Berechnung und Berücksichtigung bereit hält.

10. Kryptographie-Prozessor zur Durchführung des Kryptographie-Verfahrens nach Anspruch 1, gekennzeichnet durch eine Aneinanderreihung von für die Berechnung der einzelnen Operationen spezialisierten Elementarzellen (10), wobei jeweils mehrere Elementarzellen (10, Fig. 8) stufenweise zu größeren Blöcken (32; Fig. 9) zusammengefaßt sind, und wobei jedem Block (28; 32) ein baumartiges hierarchisches Carry-Look-Ahead-Element (30) zugeordnet ist, wodurch im Normalfall gewährleistet ist, daß die Zeit zur Addition zweier Zahlen unabhängig von der Länge dieser Zahlen ist, und wobei in jedem Block (32) der Übertrag parallel durchgeführt wird.

11. Kryptographie-Prozessor nach Anspruch 10, dadurch gekennzeichnet, daß die Elementarzellen (10, Fig. 7) die folgenden Register und Logik-Bauteile enthalten:

ein Register (12) für den Multiplikator (M),

ein Code-Register (14),

ein Datum-Register (16),

ein UD-Shift-Register (18), in dem während der Berechnung ein Vielfaches des Modulus (N) steht, und das außer der Speicherfunktion die Fähigkeit besitzt, den Modulus (N) in einem Schritt in eine der beiden Richtungen um mehrere Stellen zu verschieben,

einen Barrel-Shifter (20), der das Ergebnis der Addition, ein Zwischenergebnis (Z) um mehrere Bits verschieben kann,

einen Bitaddierer (22) ohne Übertragsbit (Carry-Bit), der den ersten Schritt der 3-Operanden-Operation ausführt,

einen Volladdierer (24), der die beiden im Bitaddierer (22) gewonnen Zahlen addiert und als ein Zwischenergebnis (Z) speichert, und

ein Carry-Look-Ahead-Element (26), welches ein Übertragsbit berechnet.

12. Kryptographie-Prozessor nach Anspruch 11, dadurch gekennzeichnet, daß alle Komponenten (12—26) parallel arbeiten.

13. Kryptographie-Prozessor nach einem der vorhergehenden Ansprüche 10—12, dadurch gekennzeichnet, daß mehrere Blöcke (28) von Elementarzellen (10) zu größeren Blöcken (32) zusammengefaßt sind, wobei der Übertrag seriell von einem Block zum nächsten weitergegeben wird, und wobei die Carry-Look-Ahead-Elemente (30) der Blöcke (32) wiederum baumartig zusammengestellt werden, und wobei auf jedem übergeordneten Carry-Look-Ahead-Element (30) eines Blockes (32) der Übertrag gleichzeitig berechnet wird, und daß ein sich dabei ergebendes Signal gegebenenfalls einen Unterbrecher (62) ansteuert, wobei der Unterbrecher (62) die von den Carry-Look-Ahead-Elementen (30) kommenden Signale verarbeitet und die Takte für etwa acht Zyklen unterbricht, falls ein Carry-Look-Ahead-Element eines Blockes (32) ein Signal gibt.

14. Kryptographie-Prozessor nach einem der vorhergehenden Ansprüche 10—13, gekennzeichnet durch eine MultMod-Steuereinheit (36; Fig. 12) zur Steuerung der Funktionen der Elementarzellen (10), wobei die MultMod-Steuereinheit (36) folgende Bestandteile umfaßt:

eine Schiebelogik (50) für die Multiplikation,

eine Schiebelogik (52) für die Modulo-Operation,

einen Vergleicher (38), der die obersten Bits des Zwischenergebnisses (Z) des Volladdierers (24) mit den obersten Bits von 1/3, 1/6, 1/12 usw. von Modulus N parallel miteinander vergleicht,

einen ersten Begrenzer (54) für die Multiplikation, der den maximalen Schliebebetrag des Zwischenergebnisses (Z) im Bedarfsfall begrenzt, und einen zweiten Begrenzer (56) für die Modulo-Operation, der den maximalen Schiebebetrag des UD-Shift-Registers (18) im Bedarfsfall begrenzt, und

zwei Zähler (58, 60), von denen der erste Zähler (58) die noch zu verarbeitenden Bits des Registers (12) und von denen der zweite Zähler (60) die Position von Modulus N in einem Puffer (34) angibt.

15. Kryptographie-Prozessor nach einem der vorhergehenden Ansprüche 10—14, gekennzeichnet durch einen als Puffer (34) ausgebildeten Elementarblock mit einer Länge von ca. 20 Bits, der die Look-Ahead-Algorithmen für die Multiplikation und für die Modulo-Operationen voneinander entkoppelt, indem N in den Puffer (34) hineinläuft und wobei die MultMod-Steuereinheit (36) durch die Begrenzer (58, 60) gewährleistet, daß der Modulus N nicht über die Puffergrenze nach oben oder unten hinausläuft.

16. Kryptographie-Prozessor nach Anspruch 10, dadurch gekennzeichnet, daß jeweils zwanzig Elementarzellen (10) zu jeweils einem 20-Zellen-Block (32) zusammengefaßt sind.

17. Kryptographie-Prozessor nach Anspruch 10, gekennzeichnet durch eine Verschlüsselungseinheit (40, Fig. 11), einen variabel gestaltbaren Registerblock (46), einer Eingabe/Ausgabeeinheit (44) und einer Hauptsteuereinheit (42), die über Datensammelleitungen miteinander in Wirkverbindung stehen.

**Revendications**

1. Procédé de cryptographie suivant la méthode de code clé publique de Rivest, Shamir et Adleman (procédé RSA), comportant l'utilisation des opérations suivantes pour le chiffrage ou codage d'informations;

choix de deux grands nombres premiers p et q et d'un autre grand nombre E,

génération du produit $N = p \cdot q$,

transformation de l'information à chiffrer en une série de termes $P_i$, de préférence de même longueur, dont les valeurs en nombres sont plus inférieures à celle du nombre N,

chiffrage de ces termes par élévation respective à la puissance E avec génération ultérieure en modulo-N, (c'est-à-dire, on forme les nombres $C_i = P_i^E$ modulo-N),

l'élévation à la puissance étant faite par une série de multiplications et l'opération modulo étant effectuée immédiatement après chaque multiplication, (c'est-à-dire qu'elle est multipliée par N, dans l'anneau de restes résiduels,

la multiplication étant découpée en pas individuels de manière que la multiplication soit faite par une série d'additions, et

l'opération modulo étant effectuée, suivant l'algorithme de division classique, par une série de soustractions,

caractérisé par l'utilisation d'un premier procédé de prédiction (procédé de calcul prévisionnel) pour la division (Fig. 5) de manière qu'il soit aussi posisble d'effectuer la multiplication au moyen d'un second procédé de prédiction (Fig. 4).

2. Procédé de cryptographie suivant la revendication 1, caractérisé par des algorithmes de prédiction, avec lesquels le nombre maximal nécessaire d'additions ou de soustractions est réduit.

3. Procédé de cryptographie suivant la revendication 2, caractérisé en ce que le premier procédé de prédiction pour l'opération modulo est choisi tel que la valeur prédite selon la théorie des probabilités du nombre des opérations sautées par le premier procédé de prédiction est exactement aussi grand que la valeur escomptée suivant la théorie des probabilités des opérations sautées pour la multiplication dans le second procédé de prédiction.

4. Procédé de cryptographie suivant la revendication 3, caractérisé en ce qu'il y a un découplage des deux procédés de prédiction, chacun des deux procédés de prédiction produisant une somme de décalages (sz ou sn), qui définit par cycle de combien de bits est, décalé le résultat intermédiaire (Z) de la multiplication ou du modulo (N), le résultat intermédiaire (Z) étant d'une manière absolue décalé de sz bits et le modulo (N) étant décalé relativement au résultat intermédiaire (Z), de sn bits.

5. Procédé de cryptographie suivant l'une des revendications 1 à 4 caractérisé par la réunion de l'addition ou de la soustraction de l'étape de la multiplication et d'opération modulo en une seule opération (addition à 3 opérandes), par étape, non deux, mais trois opérandes étant additionnés comme suit:

$$
\begin{array}{l}
A\ i \\
+B\ i \\
+C\ i \\
\hline
S1 \qquad S0 \ = \ 0 .. \ 3
\end{array}
$$

$$X\ max\ +\ 1\ ..X\ i\ +\ 1\ ...............X\ 0\ =\ 0$$
$$Y\ max\ +\ 1\ =\ 0\ .......\ Y\ i\ ..........Y\ 0\ ,$$

et cette addition de trois opérandes étant séparée en deux parties.

6. Procédé de cryptographie suivant la revendication 5, caractérisé en ce que la première des deux parties est choisie telle qu'à chaque place binaire est produite une somme de trois bits des opérandes A, B et C, la somme de Ai, Bi et Ci étant entre 0 et 3, qui peut être donc représentée en binaire par deux bits S1 et S0, et, à partir des deux bits de somme, deux nouveaux nombres X et Y étant réunis de la manière suivante:

$$Y\ i \qquad := bit\ de\ poids\ faible\ de\ A\ i\ +\ B\ i\ +\ C\ i\ ,$$
$$Y\ max+1 \quad := 0,$$
$$X\ i+1 \qquad := bit\ de\ poids\ fort\ de\ A\ i\ +\ B\ i\ +\ C\ i\ et$$
$$X\ 0 \qquad := 0.$$

$$(i\ =\ 0,\ ...\ ,\ max)$$

7. Procédé de cryptographie suivant la revendication 5 et 6, caractérisé en ce que la seconde partie est choisie telle que les nombres X et Y sont ajoutés avec Carry (retenue) d'une manière connue en soie et que, par contre, l'addition de bits sans Carry de la première partie est réalisée à un moment où la logique d'addition normale est préparée par un signal de précharge (signal de préparation) sur le cycle suivant.

8. Procédé de cryptographie suivant la revendication 7, caractérisé en ce que l'étape suivante d'addition comprend:

a) partage des nombres longs ou grands X et Y en petits blocs (32),

b) comptage simultané des bits de Carry dans les blocs (32) par un procédé de prédiction de Carry connu en soi, et

c) transfert des bits de Carry de chaque bloc dans un bloc suivant correspondant dans le cas où les blocs voisins de bits de Carry ne s'influencent pas.

9. Procédé de cryptographie suivant la revendication 8, caractérisé en ce qu'un dispositif d'interruption de programme (62), pouvant être activé par les blocs (32, Fig. 14), est prévu, lequel, dans le cas où les bits de Carry influencent les blocs voisins, tient prêt le temps nécessaire pour leur comptage et leur considération.

10. Processeur de cryptographie destiné à la mise en oeuvre du procédé de cryptographique suivant la revendication 1, caractérisé par une mise en file de cellules élémentaires (10) spécialisées pour le comptage des opérations individuelles, plusieurs cellules élémentaires (10, Fig. 8) étant respectivement réunies en étages our avoir de plus grands blocs (32; Fig. 9) à chaque bloc (28; 32) étant affecté un élément de prédiction de Carry hiérarchiquement arborescent de manière qu'en cas normal, on est assuré que le temps d'addition de deux nombres est indépendant des longueurs de ces nombres et, dans chaque bloc (32), le transfert est effectué parallèlement.

11. Processeur de cryptographie suivant la revendication 10, caractérisé en ce que les cellules élémentaires (10; Fig. 7) contiennent les registres et les circuits logiques suivants:

un registre (12) pour le multiplicateur (M),

un registre de code (14),

un registre de données (16),

un registre à décalage UD (18) dans lequel, pendant le comptage, se trouve en multiples du modulo (N)

### EP 0 239 749 B1

et qui, outre la fonction de mémoire, a la possibilité de décaler le modulo (N), dans une étape, dans une des deux directions et de plusieurs places,

un décaleur à barillet (20) qui peut décaler le résultat de l'addition, un résultat intermédiare de plusieurs bits,

un additionneur de bits (22) sans bit de retenue (bit de Carry), qui réalise la première étape de l'opération à 3 opérandes,

un additionneur complet (24) qui additionne les deux nombres obtenus dans l'additionneur de bits (22) et mémorise comme résultat intermédiaire, et

un élément de prédiction de Carry (26) qui compte un bit de transfert.

12. Processeur de cryptographie suivant la revendication 11, caractérisé en ce que tous les composants (12 à 26) travaillent en parallèle.

13. Processeur de cryptographie suivant l'une des revendications précédentes 10 à 12, caractérisé en ce que plusieurs blocs (28) de cellules élémentaires (10) sont réunis en plus grands blocs (32), la retenue étant transmise en série d'un bloc au suivant, et les éléments de prédiction de Carry (30) des blocs (32) étant encore assemblés en arborescence, sur chaque élément de prédiction de Carry (30) superposé d'un bloc (32) la retenue étant comptée simultanément, et en ce qu'un signal en résultant commande éventuellement un circuit d'interruption (62), le circuit d'interruption (62) traitant les signaux provenant des éléments de prédiction de Carry (30) et interrompant l'horloge pendant huit cycles environ, au cas où un élément d'anticipation de Carry d'un bloc (32) délivre un signal.

14. Processeur de cryptographie suivant une des revendications précédentes 10 à 13, caractérisé par une unité de commande multimode (36; Fig. 12) destinée à commander les fonctions des cellules élémentaires (10), l'unité de commande multimode (36) comprenant les éléments suivants:

une logique de décalage (50) pour la multiplication,

une logique de décalage (52) pour l'opération modulo,

un comparateur (38) qui compare parallèlement bit-à-bit les bits de poids forts du résultat intermédiaire (Z) de l'additionneur complet (24) aux bits de poids forts de 1/3, 1/6, 1/12, etc., du modulo N,

un premier limiteur (54) pour la multiplication qui limite, en cas de besoin, la somme maximale du résultat intermédiaire (Z) et un second limiteur (56) pour l'opération modulo qui limite, en cas de besoin, la somme maximale de décalages du registre à décalage UD (18), et

deux compteurs (58, 60) dont le premier compteur (58) donne les bits du registre (12) encore à traiter et dont le second compteur (60) donne la position du modulo N dans un tampon (34).

15. Processeur de cryptographie suivant une des revendications précédentes 10 à 14, caractérisé par un bloc élémentaire réalisée sous la forme d'un tampon (34) d'une capacité de 20 bits environ qui découple l'un de l'autre des algorithmes de prédiction pour la multiplication et pour les opérations modulo daans lequel N passe dans le tampon (34) et l'unité de commande multimode (36) assurant par les limiteurs (58, 60) que le modulo ne dépasse pas la limite du tampon par excès ou par défaut.

16. Processeur de cryptographie suivant la revendication 10, caractérisé en ce que vingt cellules élémentaires (10) sont respectivement réunies en un bloc de 20 cellules (32).

17. Processeur de cryptographie suivant la revendication 10, caractérisé par une unité de codage (40; Fig. 11), un bloc registre (46) pouvant être configuré d'une manière variable, une unité d'entrée/sortie (44) et une unité de commande centrale (42) qui agissent ensemble sur les gestions de collecte de données.

**Claims**

1. Cryptographic method according to the public key code method of Rivest, Shamir, and Adleman (RSA method), for enciphering and deciphering messages comprising the steps of:

selecting two large prime numbers p and q and a further large number E; forming the product $N = p \cdot q$;

converting the message to be encrypted into a series of elements $P_i$ preferably of equal length and having numerical values less than that of N; encrypting these elements P by raising each to the power E and subsequently formation of modulo N, (i.e. the numbers $C_i = P_i^E$ modulo N are obtained); replacing the above involution step by means of a series of multiplications and after each multiplication a modulo operation is immediately performed, (i.e. by carrying out a multiplication in the remainder class ring over N); the aforesaid multiplication is broken down into individual steps, so that from multiplication is formed a series of additions; and

the modulo operation according to the classical division algorithm is replaced by a series of subtractions, characterized by the use of a first look-ahead technique for the division (fig. 5) so that the multiplication can also be carried out by a second look-ahead technique (fig. 4).

2. Cryptographic method according to claim 1, characterized in that look-ahead algorithms are used to reduce the maximum necessary number of additions and/or subtractions.

3. Cryptographic method according to claim 2, characterized in that for said first look-ahead technique for the modulo operation, is selected such that the probability-theoretical expected value of the number of operations skipped in the first look-ahead technique is exactly the same as the probability-theoretical expected value of the number of operations skipped in the second look-ahead technique for the multiplication.

4. Cryptographic method according to claim 3, characterized by uncoupling the two look-ahead techniques, each of the two look-ahead techniques generating a shift amount (sz or sn), respectively representing the number of bits the intermediate result (Z) for the multiplication, or the modulo (N), respectively, is to be shifted per cycle, the intermediate result (Z) being shifted absolutely by sz bits, and modulo (N) is shifted by sn bits relative to the intermediate result (Z).

5. Cryptographic method according to one of the claims 1 to 4, characterized in that the addition and subtraction of the multiplication step and modulo step, respectively, are combined into a single operation (a 3-operand addition) wherein three and not two operands being added per step, as follows:

```
                    A   [i]

                   +B   [i]

                   +C   [i]
                   _____


              S1        S0   =   0..3



      X [max  +  1] ..X  [i  +  1] . . . . . . . . . . . . . X [0] = 0

      Y [max  +  1]  = 0 . . . . . . . . . . . . . . . . . . Y [0],
```

said 3-operand addition being divided into two segments.

6. Cryptographic method according to claim 5, characterized by selecting the first of the two segments such that a sum of the three bits of the operands A, B and C is formed at each binary position, with the sum A[i] + B[i] + C[i] lying between 0 and 3, said sum being binary and capable of being represented by two bits, S1 and S0, and generating two new numbers X and Y from the two sum bits, as follows:

```
Y[i]          : =   the lowest valued bit of the sum A[i] + B[i] + C[i];

Y[max + 1]    : =   0;

X[i + 1]      : =   the highest valued bit of the sum A[i] + B[i] + C[i]; and

X[0]          : =   0,

(where i = 0, ..., max).
```

7. Cryptographic method according to claims 5 and 6, characterized by selecting the second segment such that the numbers X and Y are added together in per se known manner with carry, and performing the bit addition without carry of the first segment at a point in time at which normal additional logic is prepared for the next cycle by means of a precharge signal.

8. Cryptographic method according to claim 7, characterized in that said addition comprises the steps of:

a) breaking down the long or large numbers X and Y into small blocks (32);

b) simultaneously calculating the carry bits within the blocks (32) according to a per se known carry-look-ahead (CLA) method; and

c) passing on the carry bits of each block to the following block, for the case where the carry bits of neighbouring blocks are not thereby affected.

9. Cryptographic method according to claim 8, characterized by providing an interrupter (62) which is activatable by the blocks (32 (fig. 4), said interrupter, in the case where carry bits have effects beyond neighbouring blocks, making the necessary time available for said carry bits to be calculated and processed.

10. Cryptographic processor for carrying out the cryptographic method according to claim 1, characterized by a sequence of specialized elementary cells (10) for calculating the individual operations; assembled blocks each of which comprises a plurality of elementary cells (10) (fig. 8) being in each case combined in stages to larger blocks (32) (fig. 9);

a tree-like hierarchical CLA element (30) being associated with each block (28; 32), which ensures that in the normal case the time for the addition of two number is independent of the length of these numbers, and in each block (32) the carry operations are performed in parallel.

11. Cryptographic processor according to claim 10, characterized in that the elementary cells (10) (fig. 7) contain the following register and logic components:

a register (12) for the multiplier (M);

a code register (14);

a data register (16);

a UD (up/down) shift register (18) which contains a multiple of the modulo N during the calculation, and which in addition to its storage function has the capability of shifting the modulo N by a plurality of positions in one of the two directions, in a single step;

a barrel shifter (20), which can shift the result of the addition, an intermediate result (Z) by several bits;

a bit adder (22) without carry bit, which carries out the first step of the 3-operand operation;

a full adder (24) for adding two numbers obtained in said bit adder (22) and storing the result as an intermediate result (Z); and a CIA element (26) for calculating a carry bit.

12. Cryptographic processor according to claim 11, characterized in that all the components (12—26) operate in parallel.

13. Cryptographic processor according to one of the claims 10 to 12, characterized by combining a plurality of blocks (28) of elementary cells (10) into larger blocks (32), the carry being passed serially from one block to the next, the CLA elements (30) of the bocks (32) being once again given a tree-like structure, the carry being calculated simultaneously on each superordinate CLA element (30) of a block, so that a signal from the carry calculations can optionally actuate an interrupter (62) which processes the signal coming from the CLA elements (30) and interrupts the clocks for about 8 cycles if a CLA element of a block (32) emits a signal.

14. Cryptographic processor according to one of the claims 10 to 13, characterized by a mult-mod control unit (36) (fig. 12) for controlling the functions of said elementary cells (10), said mult-mod control unit (36) comprising:

a shift logic (50) for the multiplication;

a shift logic (52) for the modulo operation;

a comparator (38) which compares the topmost bits of the intermediate result (Z) of said full adder (24) with the topmost bits of 1/3, 1/6, 1/12, etc. of modulo N, parallel to each other;

a first limiter (54) for the multiplication, which limits the maximum shift amount of intermediate result (Z); and

a second limiter (56), for the modulo operation, which limits the maximum shift amount of said UD shift register (18) when needed; and two counters (58, 60), the first of said counters (58) registering the number of bits of register (12) still to be processed, and said second counter (60) registering the position of modulo N in a buffer (34).

15. Cryptographic processor according to one of the claims 1 to 14, characterized by an elementary block configured as a buffer (34) having a length of about 20 bits, for uncoupling said look-ahead algorithm for the multiplication from the look-ahead algorithm for the modulo operation, N penetrating said buffer (34), the mult-mod control unit (36) ensuring via said limiters (58, 60) that modulo N does not exit either the upper or lower boundary of the buffer.

16. Cryptographic processor according to claim 10, characterized in that each 20-cell block (32) comprises an aggregation of 20 elementary cells (10).

17. Cryptographic processor according to claim 10, characterized by an encryption and decryption unit (40) (fig. 11), a variable-configuraton register block (46), an input/output unit (44), and a main control unit (42), in active communication with said encryption and decryption unit via data buses.

24

## FIG. 1

**(a)**

P, E, N

C := 1

e := 0

E[e] = 1 ?  — NO

YES

C := C•P

P := P•P

e := e+1

e = L(E) ? — NO

YES

C := C mod N

C

END

**(b)**

P, E, N

C := 1

e := 0

E[e] = 1 ? — NO

YES

C := C•P

C := C mod N

P := P•P

P := P mod N

e := e+1

e = L(E) ? — NO

YES

C

END

# FIG. 2

Flowchart:

Start

M, P

Z := 0

m := L(M)

Z := 2 • Z

m := m - 1

M [m] = 1 ?  — NO

YES

Z := Z + P

m = 0 ?  — NO

YES

Z

END

FIG.3

EP 0 239 749 B1

(a)

(b)

## FIG. 4

m, LA :
globale Variablen

**FIG. 5**

n, sz :
globale Variable

b, sn

sn := 0

$ZDN := \frac{2}{3} \cdot N$

n=0 OR sn=-k ?  — YES / NO

n := n − 1

sn := sn − 1

ZDN := ZDN/2

Abs(Z) > ZDN ?  — YES / NO

b := 0

b := 2·Z[SIGN]−1

n := n + sz

sn := sn + sz

n > MAX−k ?  — YES / NO

cur_k := MAX−k+1

cur_k := k

END

## FIG. 6

(a)

(b)

FIG.7

# FIG. 8

4 - Zellen - Block $_k$

FIG.9                    20 - Zellen Block$_k$

$M_{k+19...k+17}$ )     $N_{k+19,k+18}$ )   $X_{k+20}$ )   $Prop4_{k+20}$
    $N_{k+21,k+20}$        $Z_{k+19...k+17}$      $Carry_{k+20}$

4 - Zellen Block$_{k+16}$

$N_{k+17,k+16}$     $Z_{k+15...k+13}$     $Carry_{k+16}$
$M_{k+15...k+13}$ )   $N_{k+15,k+14}$ )   $X_{k+16}$ )   $Prop4_{k+16}$          ~28

$M_{k+15...k+13}$ )   $N_{k+15,k+14}$ )   $X_{k+16}$ )   $Prop4_{k+16}$
    $N_{k+17,k+16}$        $Z_{k+15...k+13}$     $Carry_{k+16}$

4-Zellen Block$_{k+12}$

$N_{k+13,k+12}$     $Z_{k+11...k+9}$     $Carry_{k+12}$
$M_{k+11...k+9}$ )   $N_{k+11,k+10}$ )   $X_{k+12}$ )   $Prop4_{k+12}$          ~28

$M_{k+11...k+9}$ )   $N_{k+11,k+10}$ )   $X_{k+12}$ )   $Prop4_{k+12}$
    $N_{k+13,k+12}$        $Z_{k+11...k+9}$     $Carry_{k+12}$

Steuersignale
4-Zellen Block$_{k+8}$

$N_{k+9,k+8}$     $Z_{k+7...k+5}$     $Carry_{k+8}$
$M_{k+7...k+5}$ )   $N_{k+7,k+6}$ )   $X_{k+8}$ )   $Prop4_{k+8}$          ~28

$M_{k+7...k+5}$ )   $N_{k+7,k+6}$ )   $X_{k+8}$ )   $Prop4_{k+8}$
    $N_{k+9,k+8}$        $Z_{k+7...k+5}$     $Carry_{k+8}$

4 - Zellen Block$_{k+4}$

$N_{k+5,k+4}$     $Z_{k+3...k+1}$ .   $Carry_{k+4}$
$M_{k+3...k+1}$ )   $N_{k+3,k+2}$ )   $X_{k+4}$ )   $Prop4_{k+4}$          ~28

$M_{k+3...k+1}$ )   $N_{k+3,k+2}$ )   $X_{k+4}$ )   $Prop4_{k+4}$
    $N_{k+5,k+4}$        $Z_{k+3...k+1}$     $Carry_{k+4}$          -

32 ~
4 - Zellen Block$_k$          ~28

$N_{k+1,k}$     $Z_{k-1...k-3}$
$M_{k-1...k-3}$ )   $N_{k-1,k-2}$ )   $X_k$   $Carry_k$   $Prop4_k$

Mehr Zyklen
notwendig

# FIG. 10

FIG. 11

Flags

Control

42

43

1
1
1

Signals

44

46

40

FIG. 12

EP 0 239 749 B1

## FIG. 13

FIG.14

Clock → [ ] → Clock'

Enable 62

32

Kill Off

Propagate Off

CLA

30

CLA

30

30

32

Carry On

CLA

30

32

FIG.15

FIG.16

Controller

Data
Control ─36

Control
10-Unit

Flags
Control
Data    Data

44,42

Control

Data
Z

12,14,16,18

Control

P
N

+P/-P/O
+N/-N/O

Z

A
B
C

X
Y

3-Operand-Adder

22        24

Control
Barrel-Shifter
0...3 Bit

Z

Z

Z

20

EP 0 239 749 B1

FIG. 17